# EUROPEAN PATENT APPLICATION

(11) **EP 4 527 489 A1**
(43) Date of publication of application: **26.03.2025**
(21) Application number: 23807229.2
(22) Date of filing: 09.02.2023
(51) Int. Cl.: B01D 53/62, B01D 46/04, B01D 53/78, B01D 53/83, B01D 53/86, B01D 53/90

(54) **METHOD FOR TREATING EXHAUST GAS, AND FACILITY FOR CARRYING OUT METHOD**

(30) Priority: 19.05.2022 JP 2022082040
(71) Applicant: Mitsubishi Heavy Industries, Ltd., Tokyo 100-8332 (JP)
(72) Inventor: KATSUKI, Masatoshi, Tokyo 100-8332 (JP); SUZUKI, Takumi, Tokyo 100-8332 (JP); MUKAI, Yosuke, Tokyo 100-8332 (JP); INUI, Masayuki, Tokyo 100-8332 (JP); SAKURAI, Hideaki, Tokyo 100-8332 (JP); KOKUBO, Minori, Tokyo 100-8332 (JP)
(74) Representative: Studio Torta S.p.A.
(86) International application number: PCT/JP2023/004292
(87) International publication number: WO 2023/223611

(57) **Abstract**

Provided is an exhaust gas treatment facility comprising: a dust collection filter device that includes a dust collection filter having a heat resistance of at least 250°C; an exhaust gas line that can introduce an exhaust gas including an acidic gas which contains carbon dioxide into the dust collection filter device; and a reaction agent supplier that can supply, into the exhaust gas, a reaction agent that is capable of reacting with carbon dioxide. The exhaust gas line is connected to the inlet of the dust collection filter device. The reaction agent supplier can supply the reaction agent into the exhaust gas line or an inlet-side space inside the dust collection filter device.

## Description

### Technical Field

The present disclosure relates to a method for treating an exhaust gas and a facility for carrying out the method.

Priority is claimed on Japanese Patent Application No. 2022-082040, filed May 19, 2022, the content of which is incorporated herein by reference.

### Background Art

As a facility for treating exhaust gas, for example, there is a facility described in PTL 1. This facility includes a dust collection filter device, a cooling device for cooling exhaust gas, an exhaust gas line for introducing the exhaust gas cooled by the cooling device into the dust collection filter device, and supply means for supplying slaked lime into the exhaust gas line. The cooling device cools the exhaust gas to 200°C or less. Slaked lime flows into the dust collection filter device together with exhaust gas at 200°C or less. Acid gases such as hydrogen chloride (HCl) and sulfur oxides (SOx) in the exhaust gas react with slaked lime (Ca(OH)₂) to generate Ca chlorides and sulfides. These Ca chlorides and sulfides are collected by the dust collection filter of the dust collection filter device together with fine powder such as ash contained in the exhaust gas.

Therefore, in the facility described in PTL 1, hydrogen chloride, sulfur oxides, and fine powder in the exhaust gas can be removed.

### Citation List

### Patent Document

[PTL 1] Japanese Unexamined Patent Application Publication No. 2021-154213 A

### Summary of Invention

### Technical Problem

In recent years, it has been desired to remove carbon dioxide from exhaust gas from the viewpoint of environmental preservation.

Therefore, an object of the present disclosure is to provide a method for treating an exhaust gas capable of removing carbon dioxide in exhaust gas together with fine powder in the exhaust gas, and facility for carrying out the method.

### Solution to Problem

An exhaust gas treatment facility as one aspect for achieving the above object includes:
a dust collection filter device; an exhaust gas line capable of introducing an exhaust gas containing an acid gas containing carbon dioxide into said dust collection filter device; and a reactant supplier capable of supplying a reactant capable of reacting with carbon dioxide into the exhaust gas. The dust collection filter device includes a case having an inlet through which gas flows in and an outlet through which gas flows out are formed, and a dust collection filter that partitions an inside of the case into an inlet-side space on a side of the inlet and an outlet-side space on a side of the outlet and has heat resistance of 250°C or higher. The exhaust gas line is connected to the inlet of the dust collection filter device. The reactant supplier is capable of supplying the reactant into the exhaust gas line or into the inlet-side space.

The carbon dioxide in the exhaust gas reacts with the reactant to form a reaction product. The reaction product is collected by the dust collection filter of the dust collection filter device as a solid together with fine powders such as ash and heavy metals contained in the exhaust gas. Therefore, in the present aspect, carbon dioxide in the exhaust gas can be removed together with the fine powder in the exhaust gas.

In order to increase the reaction efficiency between the carbon dioxide in the exhaust gas and the reactant, the reaction environment is desirably 250°C or higher. In the present aspect, since the dust collection filter having heat resistance of 250°C or higher is used, the exhaust gas of 250°C or higher can flow into the dust collection filter device. That is, in the present aspect, the reaction environment between the carbon dioxide in the exhaust gas and the reactant can be set to 250°C or higher. Therefore, in the present aspect, the removal efficiency of carbon dioxide from the exhaust gas can be enhanced.

A method for treating an exhaust gas as one aspect for achieving the above object including:
a reactant supplying step of supplying a reactant capable of reacting with carbon dioxide to an exhaust gas of 250°C or higher containing an acid gas containing carbon dioxide; and a collecting step of collecting, by using a dust collection filter device including a dust collection filter having heat resistance of 250°C or higher, a solid flowing into the dust collection filter device using the dust collection filter device.

In the present aspect, the same effect as that of the exhaust gas treatment facility as one aspect can be obtained. That is, in the present aspect, carbon dioxide in the exhaust gas can be removed together with the fine powder in the exhaust gas. Furthermore, in the present aspect, the removal efficiency of carbon dioxide from the exhaust gas can be enhanced.

### Advantageous Effects of Invention

In one aspect of the present disclosure, carbon dioxide in exhaust gas can be removed together with fine powder in the exhaust gas.

### Brief Description of Drawings

Fig. 1 is a system diagram of an exhaust gas treatment facility according to a first embodiment of the present disclosure.
Fig. 2 is a schematic diagram illustrating a configuration of an acid gas separation device according to the first embodiment of the present disclosure.
Fig. 3 is a schematic diagram illustrating a configuration of another acid gas separation device according to the first embodiment of the present disclosure.
Fig. 4 is a schematic diagram illustrating a configuration of a regeneration device and a reactant supplier according to the first embodiment of the present disclosure.
Fig. 5 is a flowchart illustrating a flow of processing in the exhaust gas treatment facility according to the first embodiment of the present disclosure.
Fig. 6 is a system diagram of an exhaust gas treatment facility according to a second embodiment of the present disclosure.
Fig. 7 is a flowchart illustrating a flow of processing in the exhaust gas treatment facility according to the second embodiment of the present disclosure.
Fig. 8 is a graph showing the relationship between the reaction time of various acid gases and a reactant and the concentration of various acid gases.
Fig. 9 is a system diagram of an exhaust gas treatment facility according to a third embodiment of the present disclosure.
Fig. 10 is a flowchart illustrating a flow of processing in the exhaust gas treatment facility according to the third embodiment of the present disclosure.
Fig. 11 is a system diagram of an exhaust gas treatment facility according to a fourth embodiment of the present disclosure.
Fig. 12 is a flowchart illustrating a flow of processing in the exhaust gas treatment facility according to the fourth embodiment of the present disclosure.
Fig. 13 is a schematic diagram illustrating a configuration of a modification example of the acid gas separation device according to the first embodiment of the present disclosure.
Fig. 14 is a schematic diagram illustrating a configuration of a modification example of another acid gas separation device according to the first embodiment of the present disclosure.
Fig. 15 is a flowchart illustrating a flow of processing in a modification example of the exhaust gas treatment facility in the first embodiment according to the present disclosure.
Fig. 16 is a schematic diagram illustrating a configuration of a modification example of the regeneration device and the reactant supplier in the first embodiment according to the present disclosure.
Fig. 17 is a flowchart illustrating a flow of processing in another modification example of the exhaust gas treatment facility according to the first embodiment of the present disclosure.

### Description of Embodiments

Hereinafter, various embodiments and various modification examples of a method for treating an exhaust gas according to the present disclosure and facility for carrying out the method will be described with reference to the drawings.

### [First Embodiment]

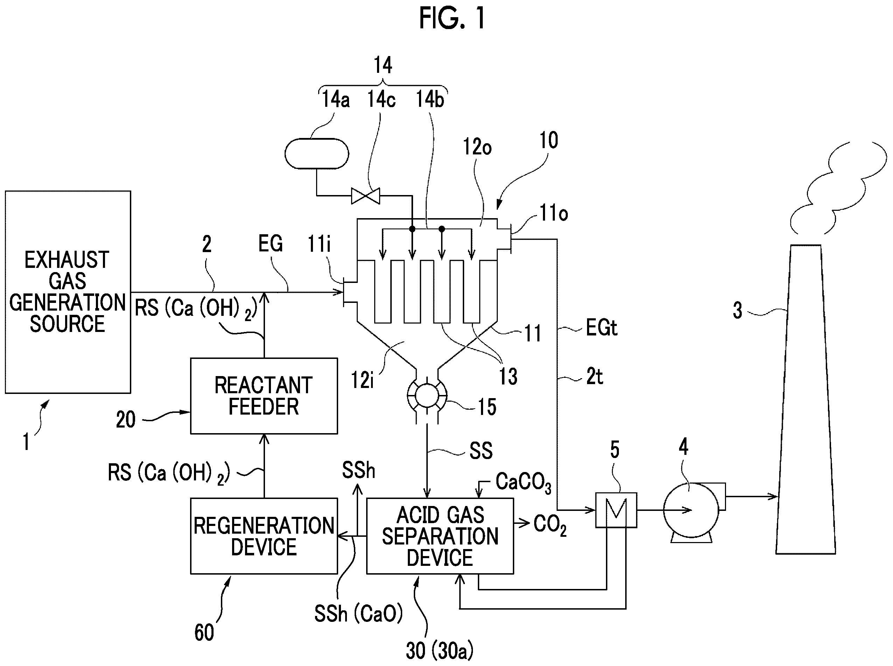

Hereinafter, a first embodiment of a method for treating an exhaust gas and facility for carrying out the method according to the present disclosure will be described with reference to Figs. 1 to 5.

As shown in Fig. 1 and the like, the exhaust gas treatment facility in the present embodiment and each embodiment described below is a facility that treats exhaust gas EG from an exhaust gas generation source 1. Examples of the exhaust gas generation source 1 include a waste incinerator, a coal or natural gas-fired power generation plant, a gas turbine, a gas engine, a cement plant, an iron manufacturing plant, and a glass melting plant. The exhaust gas EG from the exhaust gas generation source 1 contains acid gas, ash, heavy metals, and the like. The acid gas contains sulfur dioxide (SO₂), hydrochloric acid (HCl), nitrogen monoxide (NO), and the like in addition to carbon dioxide (CO₂). The temperature of the exhaust gas EG is 250°C or higher.

The exhaust gas treatment facility in the present embodiment includes a dust collection filter device 10, an exhaust gas line 2, a treated exhaust gas line 2t, a stack 3, a suction blower 4, an exhaust heat recovery device 5, a reactant supplier 20, an acid gas separation device 30, and a regeneration device 60.

The dust collection filter device 10 includes a case 11, a dust collection filter 13 capable of collecting solids SS, a backwashing device 14, and a discharger 15. The case 11 is formed with an inlet 11i through which gas flows in and an outlet 11o through which gas flows out. The dust collection filter 13 has heat resistance of 250°C or higher. The fibers constituting the dust collection filter 13 are, for example, glass fibers, ceramic fibers, or the like. The dust collection filter 13 is disposed so as to partition the inside of the case 11 into an inlet-side space 12i on the side of the inlet 11i and an outlet-side space 12o on the side of the outlet 11o. When the dust collection filter 13 is formed of the fibers described above, the dust collection filter device 10 functions even when the exhaust gas EG flowing into the dust collection filter device 10 has a temperature of 250°C or higher.

The backwashing device 14 can separate the solids SS collected by the dust collection filter 13 from the dust collection filter 13 by sending high-pressure gas (for example, high-pressure air) to the outlet-side space 12o so that the outlet-side space 12o in the case 11 has a higher pressure than the inlet-side space 12i. The backwashing device 14 includes a high-pressure gas tank for backwashing 14a, a high-pressure gas guide pipe 14b that sends the high-pressure gas in the high-pressure gas tank for backwashing 14a from the outlet-side space 12o side in the case 11 to the dust collection filter 13, and an on/off valve 14c provided in the high-pressure gas guide pipe 14b. The discharger 15 can discharge, to the outside, the solids SS that have been separated from the dust collection filter 13 by the operation of the backwashing device 14 and fall through the inlet-side space 12i in the case 11. Examples of the discharger 15 include a rotary valve and a screw conveyor.

One end of the exhaust gas line 2 is connected to the exhaust gas generation source 1, and the other end of the exhaust gas line 2 is connected to an inlet 11i of the dust collection filter device 10. Therefore, the exhaust gas EG from the exhaust gas generation source 1 can be guided into the dust collection filter device 10 by the exhaust gas line 2.

One end of the treated exhaust gas line 2t is connected to the outlet 11o of the dust collection filter device 10, and the other end of the treated exhaust gas line 2t is connected to the stack 3. Therefore, the treated exhaust gas EGt, which is the exhaust gas EG having passed through the dust collection filter device 10, can be guided to the stack 3 by the treated exhaust gas line 2t.

The suction blower 4 and the exhaust heat recovery device 5 are provided in the treated exhaust gas line 2t. The exhaust heat recovery device 5 is a heat exchanger that heats the heating medium by exchanging heat between the treated exhaust gas EGt flowing through the treated exhaust gas line 2t and the heating medium. If the treated exhaust gas EGt can be discharged from the stack 3 without the suction blower 4, the suction blower 4 is unnecessary.

The reactant supplier 20 can supply the reactant RS capable of reacting with the acid gas containing carbon dioxide into the exhaust gas EG. The reactant RS in the present embodiment is calcium hydroxide (Ca(OH)₂, slaked lime) which is a kind of hydroxide (metal hydroxide or basic hydroxide). The reactant RS can react not only with carbon dioxide (CO₂) but also with sulfur dioxide (SO₂) and hydrochloric acid (HCl). The configuration of the reactant supplier 20 will be described later.

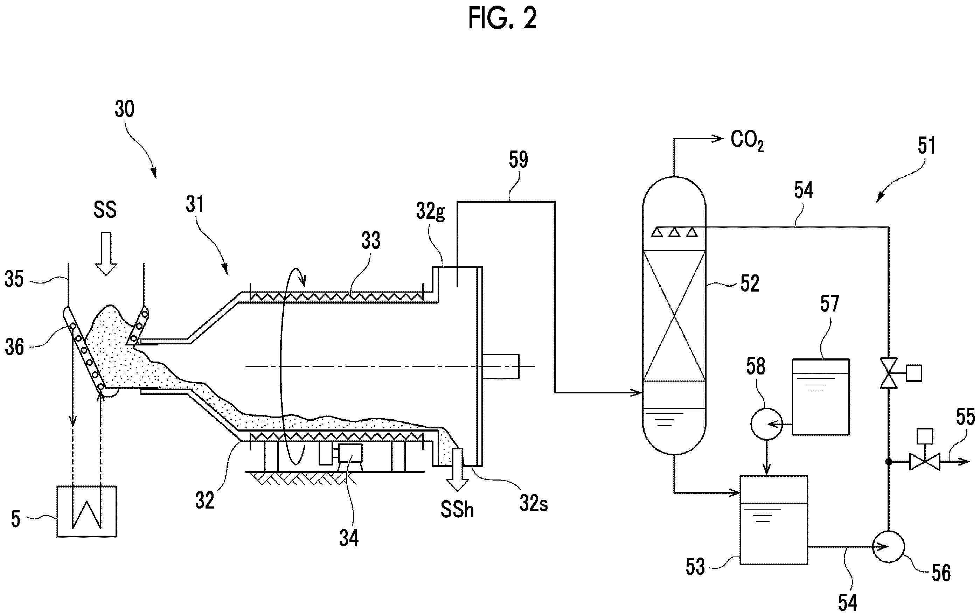

As shown in Fig. 2, the acid gas separation device 30 includes a heating device 31 capable of heating the solid SS from the dust collection filter device 10, a preheater (exhaust heat utilization device) 36, and a carbon dioxide separation device 51 capable of separating carbon dioxide from the gas discharged from the heating device 31.

The heating device 31 shown in Fig. 2 is a rotary kiln. The heating device 31 includes a barrel 32, an electric heater 33 disposed on the outer periphery of the barrel 32, a barrel rotation mechanism 34 that rotates the barrel 32, and a feeder 35 that feeds the solid SS into the barrel 32. A feeder 35 is connected to one end of the barrel 32, and a gas exhaust port 32g and a solid discharge port 32s are formed at the other end of the barrel 32. The solid SS discharged from the dust collection filter device 10 is supplied to the feeder 35. The solid SS contains a reaction product generated by the reaction between the acid gas and the reactant RS, the unreacted reactant RS, ash, heavy metals, and the like. As shown below, the reaction products include calcium carbonate (CaCO₃) generated by the reaction between the reactant RS (Ca(OH)₂) and carbon dioxide (CO₂), calcium sulfate (CaSO₄) generated by the reaction between the reactant RS (Ca(OH)₂) and sulfur dioxide (SO₂), and calcium chloride (CaCl₂) generated by the reaction between the reactant RS (Ca(OH)₂) and hydrochloric acid (HCl). The reaction product may contain sulfides other than calcium sulfate and chlorides other than calcium chloride.

Ca(OH)₂+CO₂→CaCO₃+H₂O

Ca(OH)₂+SO₂+1/2O₂→CaSO₄+H₂O

Ca(OH)₂+2HCl→CaCl₂+2H₂O

The preheater 36 is disposed around the feeder 35 so as to be in contact with the feeder 35. The preheater (exhaust heat utilization device) 36 heats the solid SS by exchanging heat between the heating medium heated by the exhaust heat recovery device 5 and the solid SS in the feeder 35. Here, the preheater 36 is disposed around the feeder 35, but the preheater 36 may be disposed around a pipe for feeding the solid SS from the dust collection filter device 10 to the heating device 31. The solid SS heated by the preheater 36 is fed into the barrel 32 by the feeder 35, and is further heated by the electric heater 33 in the barrel 32. The solid SS is heated to about 900°C by the electric heater 33. When the solid SS is heated in the barrel 32, calcium carbonate (CaCO₃) in the solid SS is separated into calcium oxide (CaO, quicklime) and carbon dioxide (CO₂) as described below. Calcium sulfides such as calcium sulfate (CaSO₄) in the solid SS is separated into calcium oxide (CaO, quicklime), sulfur dioxide (SO₂), and oxygen (O₂). Calcium chlorides such as calcium chloride (CaCl₂) in the solid SS is separated into calcium oxide (CaO, quicklime) and hydrochloric acid (HCl). However, not all of the calcium sulfides and calcium chlorides in the solid SS are decomposed, and some of them remain undecomposed.

The heated solid SSh generated by heating the solid SS in the barrel 32 is discharged from the solid discharge port 32s of the barrel 32. The heated solid SSh contains calcium oxide (CaO, quicklime), which is a kind of basic oxide (basic metal oxide).

The gas generated by heating the solid SS in the barrel 32 is exhausted from the gas exhaust port 32g of the barrel 32. This gas contains carbon dioxide (CO₂), sulfur dioxide (SO₂), and hydrochloric acid (HCl). Here, the heating device 31 heats the solid SS with an electric heater 33. However, instead of the electric heater 33, a burner for injecting fuel into the barrel 32 may be provided, and the solid may be heated by heat generated by combustion of the fuel from the burner.

The carbon dioxide separation device 51 includes an absorption tower 52, an absorption liquid tank 53, a circulation line 54, a liquid discharge line 55, a circulation pump 56, an undiluted absorption liquid tank 57, and an undiluted absorption liquid pump 58. The undiluted absorption liquid tank 57 stores an undiluted absorption liquid that absorbs sulfur dioxide (SO₂) and hydrochloric acid (HCl) and hardly absorbs carbon dioxide (CO₂). Examples of the absorption liquid include water at a predetermined temperature. When the liquid amount in the absorption liquid tank 53 decreases, the undiluted absorption liquid in the undiluted absorption liquid tank 57 is supplied into the absorption liquid tank 53 by the undiluted absorption liquid pump 58. A packing is disposed in an intermediate portion of the absorption tower 52. One end of an acid gas line 59 is connected to a portion below the packing of the absorption tower 52. The other end of the acid gas line 59 is connected to the gas exhaust port 32g of the barrel 32. Therefore, the acid gas from the heating device 31 flows into the absorption tower 52 through the acid gas line 59. One end of the circulation line 54 is connected to the lower end of the absorption tower 52, and the other end of the circulation line 54 is connected to a portion above the packing of the absorption tower 52. An absorption liquid tank 53 and a circulation pump 56 are connected to the circulation line 54. Therefore, the absorption liquid in the absorption liquid tank 53 is supplied to the upper portion of the absorption tower 52 through the circulation line 54. The absorption liquid in the absorption tower 52 returns to the absorption liquid tank 53 through the circulation line 54. A liquid discharge line 55 is connected to the circulation line 54. When the acid concentration of the absorption liquid in the absorption liquid tank 53 becomes equal to or higher than a predetermined concentration, the absorption liquid is discharged to the outside through the circulation line 54 and the liquid discharge line 55 and is recovered. Carbon dioxide (CO₂), which is an acid gas that has not been absorbed by the absorption liquid in the absorption tower 52, is exhausted from the top of the absorption tower 52 to the outside and recovered.

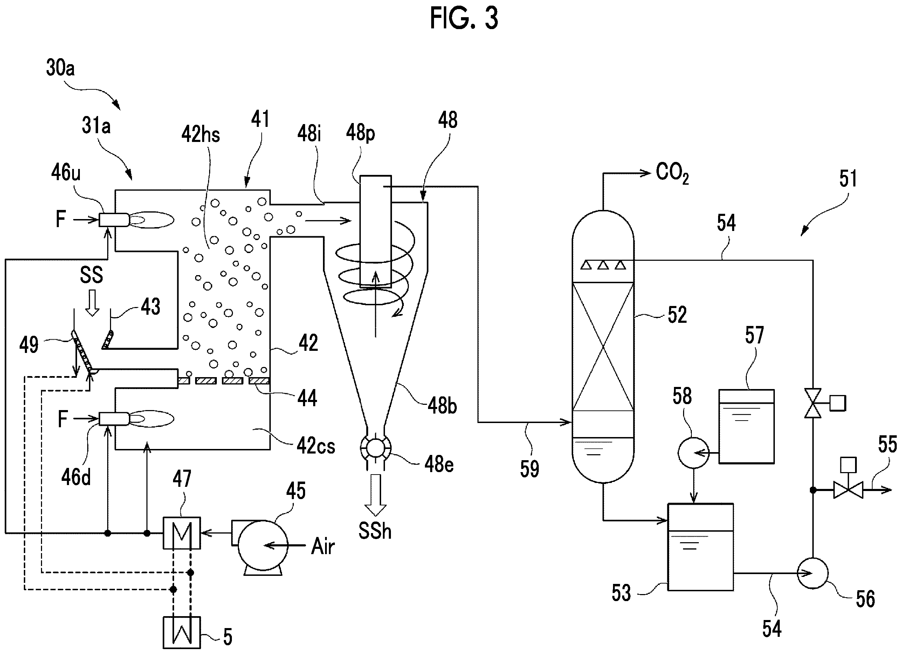

Other aspects of the acid gas separation device 30 are also conceivable. As shown in Fig. 3, the acid gas separation device 30a of another aspect includes a heating device 31a capable of heating the solid SS from the dust collection filter device 10, a preheater 49, an air heater (exhaust heat utilization device) 47, and a carbon dioxide separation device 51 capable of separating carbon dioxide from the gas exhausted from the heating device 31a. The carbon dioxide separation device 51 of the acid gas separation device 30a is the same as the carbon dioxide separation device 51 of the acid gas separation device 30 described above. On the other hand, the heating device 31a of the acid gas separation device 30a is different from the heating device 31 of the acid gas separation device 30 described above.

The heating device 31a shown in Fig. 3 includes a firing furnace 41 and a cyclone 48. The firing furnace 41 includes a furnace frame 42, a feeder 43 that feeds the solid SS into the furnace frame 42, a diffusion plate 44 in which a plurality of holes are formed, a carrier gas blower 45, a lower burner 46d, and an upper burner 46u. The space in the furnace frame 42 is partitioned by the diffusion plate 44 into an upper heating space 42hs and a lower carrier gas space 42cs. The lower burner 46d is connected to a lower portion of the furnace frame 42 so as to inject the fuel F and air into the carrier gas space 42cs. The upper burner 46u is connected to the upper portion of the furnace frame 42 so that the fuel F and air can be injected to the upper portion of the heating space 42hs.

The feeder 43 is connected to an intermediate portion of the furnace frame 42 so as to be capable of supplying the solid SS from the dust collection filter device 10 to a lower portion of the heating space 42hs. The preheater 49 is disposed around the feeder 43 so as to be in contact with the feeder 43. The preheater 49 heats the solid SS by exchanging heat between the heating medium heated by the exhaust heat recovery device 5 and the solid portion in the feeder 43. Here, the preheater 49 is disposed around the feeder 43, but the preheater 49 may be disposed around a pipe for feeding the solid SS from the dust collection filter device 10 to the heating device 31a.

The carrier gas blower 45 sends air into the carrier gas space 42cs. The air heater (exhaust heat utilization device) 47 exchanges heat between the heating medium heated by the exhaust heat recovery device 5 and the air from the carrier gas blower 45 to heat the air. A part of the air is sent to the carrier gas space 42cs, and the remaining part is sent to the lower burner 46d and the upper burner 46u.

The cyclone 48 includes a cyclone body 48b, a gas outlet pipe 48p, and a discharger 48e. The cyclone body 48b has a conical shape, and is disposed such that a portion corresponding to a bottom surface of the cone faces upward. The gas outlet pipe 48p is disposed on a central axis of the conical cyclone body 48b so as to penetrate from the upper side of the cyclone body 48b into the cyclone body 48b. The discharger 48e is connected to a lower portion of the cyclone body 48b. An inlet 48i is formed in a side periphery of an upper portion of the cyclone body 48b.

The solids SS supplied from the dust collection filter device 10 to the feeder 43 are heated by the preheater 49 and then supplied to the lower portion of the heating space 42hs. Combustion gas is generated by combustion of the fuel F ejected from the lower burner 46d and the upper burner 46u. The solid SS is heated to about 900°C in the furnace frame 42 by the combustion gas. The firing furnace 41 includes a lower burner 46d and an upper burner 46u. However, the combustion furnace may have only one of the burners. Here, the space in the furnace frame 42 is heated by combustion of fuel injected from a burner. However, an electric heater may be provided in the furnace frame 42, and the space in the furnace frame 42 may be heated by the electric heater.

When the solid SS is heated, as described above, the solid SS is decomposed, and the heated solid SSh and the acid gas are generated. Further, when the heat of the combustion gas generated by the combustion of the fuel is used to heat the solid SS, a combustion gas containing carbon dioxide is also generated.

The heated solid SSh and the acid gas flow into the cyclone body 48b from the inlet 48i of the cyclone body 48b. When the heat of the combustion gas generated by the combustion of the fuel is used to heat the solid SS, the combustion gas also flows into the cyclone body 48b. In the cyclone body 48b, the heated solid SSh, which is a solid, and gas (acid gas, combustion gas) are separated. The heated solid SSh is discharged to the outside of the cyclone body 48b by the discharger 48e. The gas (acid gas, combustion gas) is sent to the absorption tower 52 of the carbon dioxide separation device 51 via the acid gas line 59. The carbon dioxide in the gas (acid gas, combustion gas) is separated from other gases in the gas in the absorption tower 52 and then recovered as described above. Here, a cyclone is used for separation of the heated solid SSh and the gas, but a dust collection filter or a fluidized bed may be used instead of the cyclone.

As described above, the heating device may have any configuration as long as the solid SS recovered from the dust collection filter device 10 can be heated to about 900°C or higher. The carbon dioxide separation device 51 may have any configuration as long as carbon dioxide can be separated from the acid gas. The acid gas separation devices 30 and 30a in the present embodiment include the carbon dioxide separation device 51 capable of separating carbon dioxide from the acid gas. However, when the acid gas can be recovered as it is, the carbon dioxide separation device 51 may be omitted.

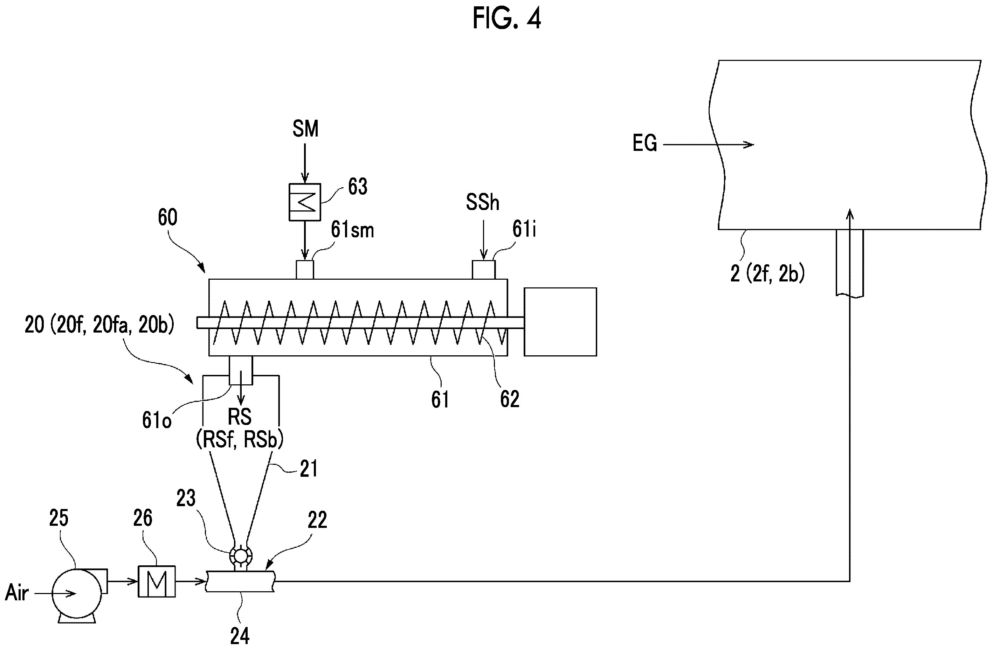

As illustrated in Fig. 4, the regeneration device 60 includes a reaction container 61 and a stirrer 62 that stirs the inside of the reaction container 61. The reaction container 61 has an inlet 61i for guiding the heated solid SSh from the acid gas separation devices 30 and 30a into the inside, a water inlet 61sm for guiding water or steam SM into the inside, and a discharge port 61o for discharging a product generated by a reaction between the heated solid SSh and the water or steam SM. The regeneration device 60 may further include a heater 63 for heating the water or steam SM to be introduced into the reaction container 61.

In the reaction container 61, as described below, calcium oxide (CaO, quicklime), which is a main component of the heated solid SSh, reacts with water or steam to generate calcium hydroxide (Ca (OH)₂, slaked lime).

CaO+H₂O→Ca(OH)₂

As shown in Fig. 4, the reactant supplier 20 includes a storage portion 21 capable of storing the reactant RS and a supply portion 22 capable of supplying the reactant RS stored in the storage portion 21 into the exhaust gas EG. The storage portion 21 is a reactant hopper capable of storing the reactant RS. The supply portion 22 includes a quantitative supplier 23, a transport line 24, an air conveyor blower 25, and an air heater 26. One end of the transport line 24 is connected to a discharge port of the air conveyor blower 25, and the other end of the transport line 24 is connected to the exhaust gas line 2. The quantitative supplier 23 is provided at a lower portion of the storage portion 21. The quantitative supplier 23 quantitatively supplies the reactant RS from the storage portion 21 into the transport line 24. In the transport line 24, an air heater 26 is provided between a discharge port of the air conveyor blower 25 and a position to which the reactant RS is supplied from the quantitative supplier 23. The air heater 26 heats the air from the air conveyor blower 25. The reactant RS supplied from the quantitative supplier 23 to the transport line 24 is transported in the transport line 24 by the air heated by the air heater 26 and supplied into the exhaust gas line 2.

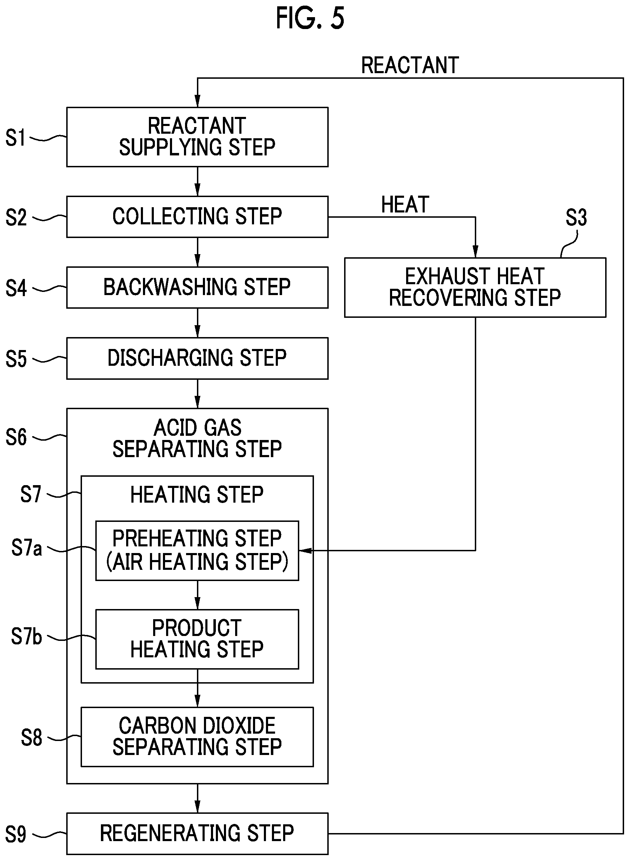

Next, a flow of processing in the exhaust gas treatment facility described above will be described with reference to a flowchart shown in Fig. 5.

The reactant supplier 20 supplies the reactant RS to the exhaust gas EG flowing through the exhaust gas line 2 (S1: reactant supplying step). As described above, the exhaust gas EG has a temperature of 250°C or more, for example, about 300 to 600°C. The exhaust gas EG contains acid gas, ash, heavy metals, and the like.

The exhaust gas EG containing the reactant RS flows into the inlet-side space 12i of the dust collection filter device 10 through the exhaust gas line 2. As a result, the solid SS in the exhaust gas EG is collected by the dust collection filter 13, and the gas in the exhaust gas EG flows out of the dust collection filter device 10 as the treated exhaust gas EGt (S2: collecting step).

The acid gas (including CO₂, SO₂, and HCl) in the exhaust gas EG reacts with the reactant RS to generate a reaction product in the process of passing through the exhaust gas line 2, the inlet-side space 12i of the dust collection filter device 10, and the layer of solid adhering to the dust collection filter 13. The reaction product adheres to the surface of the dust collection filter 13 as a part of the solid SS. As described above, the reaction product includes calcium carbonate (CaCO₃) generated by the reaction of carbon dioxide (CO₂), calcium sulfides generated by the reaction of sulfur dioxide (SO₂), calcium chlorides generated by the reaction of hydrochloric acid (HCl), and the like. Examples of the solid SS adhering to the surface of the dust collection filter 13 include ash, heavy metals, and the like in addition to the above reaction products.

The treated exhaust gas EGt is exhausted from the stack 3 to the outside through the treated exhaust gas line 2t and the exhaust heat recovery device 5. The exhaust heat recovery device 5 heats the heating medium by exchanging heat between the treated exhaust gas EGt and the heating medium (S3: exhaust heat recovering step).

When the layer of the solid SS adhering to the dust collection filter 13 becomes thick and the differential pressure between the inlet-side space 12i and the outlet-side space 12o in the dust collection filter device 10 increases, or when a predetermined time has elapsed from the previous backwashing, the backwashing step S4 is performed. In the backwashing step S4, the on/off valve 14c of the backwashing device 14 is opened, and the high-pressure gas in the high-pressure gas tank for backwashing 14a is sent from the outlet-side space 12o side of the dust collection filter device 10 to the dust collection filter 13. The solids SS adhering to the dust collection filter 13 are peeled off from the dust collection filter 13 by the high-pressure gas, and the solids SS fall in the inlet-side space 12i of the dust collection filter device 10. The solids SS falling in the inlet-side space 12i are discharged to the outside of the dust collection filter device 10 by the discharger 15 (S5: discharging step).

The solid SS discharged from the dust collection filter device 10 enters the acid gas separation devices 30 and 30a, and the acid gas separating step S6 is performed by the acid gas separation devices 30 and 30a. In the acid gas separating step S6, a heating step S7 and a carbon dioxide separating step S8 are performed.

As shown in Fig. 2, when the acid gas separation device 30 includes the heating device 31 and the preheater 36, the solid SS from the dust collection filter device 10 is supplied to the feeder 35 of the heating device 31.

**In** the heating step S7, first, the preheater 36 heats the solid SS by exchanging heat between the heating medium heated by the exhaust heat recovery device 5 and the solid SS in the feeder 35 (S7a: preheating step). **In** the preheating step S7a, since the heat of the heating medium heated by the exhaust heat recovery device 5 is used, the preheating step S7a is also an exhaust heat utilizing step. Further, in the heating step S7, the solid SS heated by the preheater 36 is fed into the barrel 32 by the feeder 35, and is further heated by the electric heater 33 in the barrel 32. The solid SS is heated to about 900°C by the electric heater 33 (S7b: product heating step).

As shown in Fig. 3, when the acid gas separation device 30a includes the heating device 31a, the preheater (exhaust heat utilization device) 49, and the air heater (exhaust heat utilization device) 47, the solid SS from the dust collection filter device 10 is supplied to the feeder 43 of the heating device 31a. **In** the heating step S7, first, the preheater (exhaust heat utilization device) 49 heats the solid SS by exchanging heat between the heating medium heated by the exhaust heat recovery device 5 and the solid SS in the feeder 43. Further, the air heater (exhaust heat utilization device) 47 exchanges heat between the heating medium heated by the exhaust heat recovery device 5 and the air from the carrier gas blower 45 to heat the air (S7a: preheating step, air heating step). **In** the preheating step and the air heating step S7a, the heat of the heating medium heated by the exhaust heat recovery device 5 is used. Therefore, the preheating step and the air heating step S7a are also an exhaust heat utilizing step. The solid SS heated by the preheater 49 is supplied into the heating space 42hs of the heating device 31a by the feeder 43. The lower burner 46d injects the air heated by the air heater 47 and the fuel F into the carrier gas space 42cs. The fuel F burns in the carrier gas space 42cs. The combustion gas generated by the combustion of the fuel F and the air heated by the air heater 47 flow as a high-temperature carrier gas from the carrier gas space 42cs into the heating space 42hs via the diffusion plate 44. The solid SS from the feeder 43 is conveyed upward while being heated in the heating space 42hs by the carrier gas. The upper burner 46u injects the air heated by the air heater 47 and the fuel F to the upper portion of the heating space 42hs. The combustion gas generated by the combustion of the fuel F further heats the solid SS conveyed by the carrier gas. As a result, the solid SS is heated to about 900°C in the furnace frame 42 (S7b: product heating step).

When the solid SS is heated in the product heating step S7b, as described above, in a case where calcium hydroxide is used as the reactant RS, the reaction product in the solid SS is decomposed, and the heated solid SSh and the acid gas are generated. Specifically, calcium carbonate (CaCO₃) in the reaction product is separated into calcium oxide (CaO, quicklime) and carbon dioxide (CO₂). The calcium sulfides in the reaction product is separated into calcium oxide (CaO, quicklime), sulfur dioxide (SO₂), and oxygen (O₂). The calcium chlorides in the reaction product is separated into calcium oxide (CaO, quicklime) and hydrochloric acid (HCl). The heated solid SSh contains ash and heavy metals in addition to the calcium oxide (CaO, quicklime) described above. Calcium oxide is a main component of the heated solid SSh. On the other hand, ash and heavy metals are trace components in the heated solid SSh. The acid gas contains carbon dioxide (CO₂), sulfur dioxide (SO₂), and hydrochloric acid (HCl). That is, the acid gas includes the acid gas in the exhaust gas EG.

The heated solid SSh is sent from the heating devices 31 and 31a to the regeneration device 60. On the other hand, the acid gas is sent from the heating devices 31 and 31a to the carbon dioxide separation device 51. Among the acid gas sent to the carbon dioxide separation device 51, sulfur dioxide (SO₂) and hydrochloric acid (HCl) are absorbed by the absorption liquid and recovered. On the other hand, carbon dioxide (CO₂) in the acid gas sent to the carbon dioxide separation device 51 is not absorbed by the absorption liquid, and is exhausted to the outside and recovered. When the heat of the combustion gas generated by the combustion of the fuel is used to heat the solid SS, the combustion gas is also sent from the heating devices 31 and 31a to the carbon dioxide separation device 51 as described above. In the carbon dioxide separation device 51, carbon dioxide contained in the combustion gas is also exhausted to the outside as a recovery target (S8: carbon dioxide separating step).

Thus, the acid gas separating step S6 is completed.

As described above, the heated solid SSh containing calcium oxide is sent from the heating devices 31 and 31a of the acid gas separation devices 30 and 30a to the regeneration device 60. The regeneration device 60 supplies water or steam to the heated solid SSh. Calcium oxide (CaO, quicklime), which is a main component of the heated solid SSh, reacts with water or steam to become calcium hydroxide (Ca(OH)₂, slaked lime) as described above (S9: regenerating step).

Calcium hydroxide (Ca(OH)₂, slaked lime) is the reactant RS in the present embodiment. A product containing calcium hydroxide (Ca(OH)₂, slaked lime) as a main component, which is the reactant RS, is sent from the regeneration device 60 to the storage portion 21 of the reactant supplier 20. The supply portion 22 of the reactant supplier 20 pneumatically conveys a product containing the reactant RS stored in the storage portion 21 as a main component into the exhaust gas EG flowing through the exhaust gas line 2. That is, as described above, the reactant supplier 20 supplies the reactant RS to the exhaust gas EG flowing through the exhaust gas line 2 (S1: reactant supplying step).

As described above, in the present embodiment, the acid gas (including carbon dioxide) in the exhaust gas EG reacts with the reactant RS to form a reaction product. The reaction product is collected by the dust collection filter 13 of the dust collection filter device 10 as a solid SS together with fine powder such as ash and heavy metals contained in the exhaust gas. Therefore, in the present embodiment, the acid gas (including carbon dioxide) in the exhaust gas EG can be removed together with the fine powder in the exhaust gas EG.

Incidentally, in order to increase the reaction efficiency between the carbon dioxide in the exhaust gas EG and the reactant RS, it is desirable that the reaction environment be 250°C or higher. In the present embodiment, since the dust collection filter 13 having heat resistance of 250°C or higher is used, the exhaust gas EG having a temperature of 250°C or higher can flow into the dust collection filter device 10. That is, in the present embodiment, the reaction environment between the carbon dioxide in the exhaust gas EG and the reactant RS can be set to 250°C or higher. Therefore, in the present aspect, the removal efficiency of carbon dioxide from the exhaust gas EG can be increased.

Further, in the present embodiment, since the reactant RS is supplied to the exhaust gas line 2, the space in which the reactant RS and the acid gas in the exhaust gas EG can react is the inside of the exhaust gas line 2 and the inlet-side space 12i of the dust collection filter device 10. For this reason, in the present embodiment, the space in which the reaction can be performed becomes wider than in a case where the reactant RS is directly supplied to the inlet-side space 12i of the dust collection filter device 10, and the reaction efficiency between the reactant RS and the acid gas in the exhaust gas EG can be increased.

In the present embodiment, the solid SS as the reaction product generated by the reaction between the carbon dioxide in the exhaust gas EG and the reactant RS can be discharged from the dust collection filter device 10, and calcium hydroxide as the reactant RS can be regenerated from the reaction product. Therefore, in the present embodiment, the consumption amount of calcium hydroxide as the reactant RS can be suppressed.

As described above, when the reactant RS is regenerated and repeatedly used, the reactant gradually deteriorates. For this reason, it is preferable to discharge from the regenerating cycle of the reactant RS a portion of the substance generated during this regenerating cycle while charging new substance into the regenerating cycle. Specifically, as shown in Fig. 1, a part of the heated solid SSh from the acid gas separation device 30 (30a) is discharged, and calcium carbonate (CaCO₃) is charged into the acid gas separation device 30 (30a).

As described above, in the present embodiment, calcium hydroxide, which is a kind of hydroxide (metal hydroxide or basic hydroxide), is used as the reactant RS and is recycled. However, as the renewable reactant RS, for example, a hydroxide (metal hydroxide or basic hydroxide) such as magnesium hydroxide (Mg(OH)₂) or barium hydroxide (Ba(OH)₂) may be used.

When calcium hydroxide, which is a kind of hydroxide (metal hydroxide or basic hydroxide), is used as the reactant RS, the main component in the heated solid SSh is calcium oxide (CaO, quicklime), which is a kind of basic oxide (basic metal oxide), as described above. When magnesium hydroxide (Mg(OH)₂) or barium hydroxide (Ba(OH)₂), which is another type of hydroxide (metal hydroxide or basic hydroxide), is used, the main component in the heated solid SSh is magnesium oxide (MgO) or barium oxide (BaO), which is another type of basic oxide (basic metal oxide).

The hydroxide described above may not be used as the reactant RS. In this case, examples of the reactant RS capable of reacting with the acid gas include the following substances.
(1) Metal Bicarbonate
   Calcium hydrogen carbonate (Ca(HCO₃)₂), sodium hydrogen carbonate (NaHCO₃), magnesium hydrogen carbonate (Mg(HCO₃)₂), barium hydrogen carbonate (Ba(HCO₃) ₂), potassium hydrogen carbonate (KHCO₃)
(2) Metal Carbonates
   Calcium carbonate (CaCO₃), sodium carbonate (Na₂CO₃), magnesium carbonate (MgCO₃), barium carbonate (BaCO₃), potassium carbonate (K₂CO₃)
(3) Other Metal Oxides
   Calcium oxide (CaO), and the like.

Some of the bicarbonates and carbonates react with sulfur dioxide and hydrochloric acid, which are a kind of acid gas, rather than with carbon dioxide, which is a kind of acid gas. On the other hand, the basic hydroxide can react with carbon dioxide, sulfur dioxide, and hydrochloric acid. Therefore, when the main purpose is to remove carbon dioxide in the exhaust gas EG, a hydroxide (metal hydroxide or basic hydroxide) is often used as the reactant RS.

### [Second Embodiment]

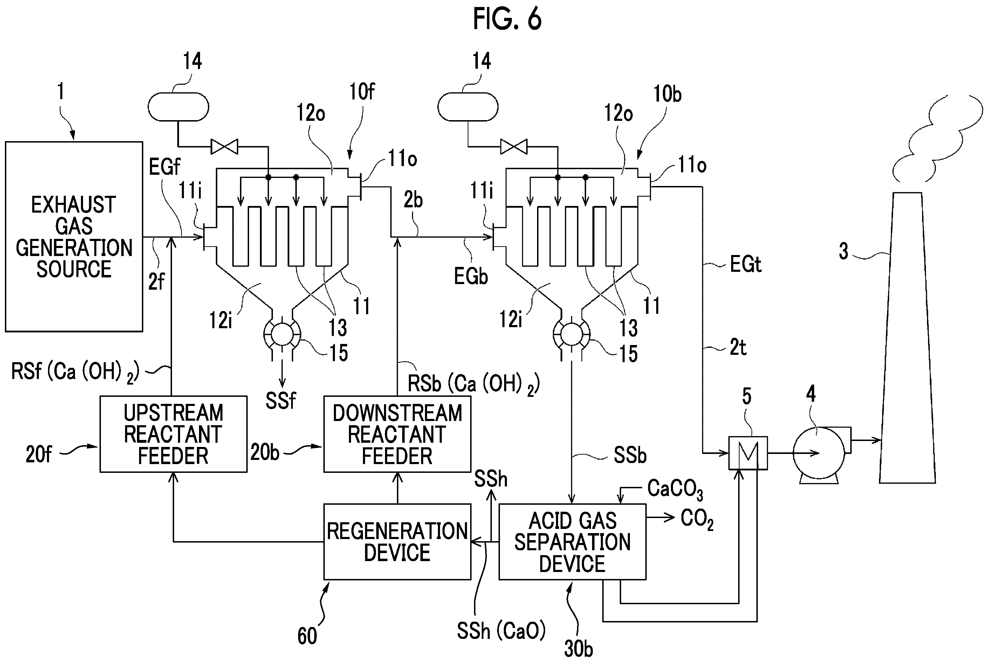

Hereinafter, a second embodiment of a method for treating an exhaust gas according to the present disclosure and facility for carrying out the method will be described with reference to Figs. 6 to 8.

As shown in Fig. 6, the exhaust gas treatment facility in the present embodiment includes an upstream dust collection filter device 10f, an upstream exhaust gas line 2f, a downstream dust collection filter device 10b, a downstream exhaust gas line 2b, a treated exhaust gas line 2t, a stack 3, a suction blower 4, an exhaust heat recovery device 5, an upstream reactant supplier 20f, a downstream reactant supplier 20b, an acid gas separation device 30b, and a regeneration device 60.

The upstream dust collection filter device 10f and the downstream dust collection filter device 10b have the same configuration as the dust collection filter device 10 in the first embodiment. Therefore, each of the upstream dust collection filter device 10f and the downstream dust collection filter device 10b includes the case 11, the dust collection filter 13 having heat resistance of 250°C or higher, the backwashing device 14, and the discharger 15. Therefore, the upstream dust collection filter device 10f and the downstream dust collection filter device 10b also function at 250°C or higher, similarly to the dust collection filter device 10 in the first embodiment.

One end of the upstream exhaust gas line 2f is connected to the exhaust gas generation source 1, and the other end of the upstream exhaust gas line 2f is connected to an inlet 11i of the upstream dust collection filter device 10f. Therefore, the upstream exhaust gas EGf, which is the exhaust gas EG from the exhaust gas generation source 1, can be guided into the upstream dust collection filter device 10f by the upstream exhaust gas line 2f.

One end of the downstream exhaust gas line 2b is connected to the outlet 11o of the upstream dust collection filter device 10f, and the other end of the downstream exhaust gas line 2b is connected to the inlet 11i of the downstream dust collection filter device 10b. Therefore, the downstream exhaust gas EGb, which is the exhaust gas EG having passed through the upstream dust collection filter device 10f, can be guided into the downstream dust collection filter device 10b by the downstream exhaust gas line 2b.

One end of the treated exhaust gas line 2t is connected to the outlet 11o of the downstream dust collection filter device 10b, and the other end of the treated exhaust gas line 2t is connected to the stack 3. Therefore, the treated exhaust gas EGt, which is the exhaust gas EG having passed through the downstream dust collection filter device 10b, can be guided to the stack 3 by the treated exhaust gas line 2t. The suction blower 4 and the exhaust heat recovery device 5 are provided in the treated exhaust gas line 2t.

The upstream reactant supplier 20f and the downstream reactant supplier 20b have the same configuration as the reactant supplier 20 in the first embodiment. Therefore, as shown in Fig. 4, the upstream reactant supplier 20f has a storage portion 21 capable of storing the upstream reactant RSf and a supply portion 22 capable of supplying the upstream reactant RSf stored in the storage portion 21 into the upstream exhaust gas EGf. Further, the downstream reactant supplier 20b has a storage portion 21 capable of storing the downstream reactant RSb and a supply portion 22 capable of supplying the downstream reactant RSb stored in the storage portion 21 into the downstream exhaust gas EGb. Each of the supply portion 22 of the upstream reactant supplier 20f and the supply portion 22 of the downstream reactant supplier 20b includes a quantitative supplier 23, a transport line 24, an air conveyor blower 25, and an air heater 26. One end of the transport line 24 of the upstream reactant supplier 20f is connected to the discharge port of the air conveyor blower 25 of the upstream reactant supplier 20f, and the other end of the transport line 24 is connected to the upstream exhaust gas line 2f. One end of the transport line 24 of the downstream reactant supplier 20b is connected to the discharge port of the air conveyor blower 25 of the downstream reactant supplier 20b, and the other end of the transport line 24 is connected to the downstream exhaust gas line 2b.

The upstream reactant RSf and the downstream reactant RSb are both calcium hydroxide (Ca(OH)₂, slaked lime), which is the same as the reactant RS in the first embodiment. Therefore, for example, the storage portion 21 of the upstream reactant supplier 20f and the storage portion 21 of the downstream reactant supplier 20b may be shared by the upstream reactant supplier 20f and the downstream reactant supplier 20b. As described above, hydroxides (metal hydroxides or basic hydroxides) other than calcium hydroxide (Ca(OH)₂, slaked lime) may be used as the upstream reactant RSf and the downstream reactant RSb. Furthermore, the quantitative supplier 23, the air conveyor blower 25, and the air heater 26 of the upstream reactant supplier 20f and the quantitative supplier 23, the air conveyor blower 25, and the air heater 26 of the downstream reactant supplier 20b may be shared by the upstream reactant supplier 20f and the downstream reactant supplier 20b.

The acid gas separation device 30b includes heating devices 31 and 31a having the same configuration as the heating devices 31 and 31a of the acid gas separation devices 30 and 30a in the first embodiment. However, the acid gas separation device 30b does not have the carbon dioxide separation device 51 of the acid gas separation devices 30 and 30a in the first embodiment. The acid gas separation device 30b can separate the acid gas from the solid SS from the downstream dust collection filter device 10b. The regeneration device 60 has the same configuration as the regeneration device 60 in the first embodiment. However, the regeneration device 60 in the present embodiment can send the substance containing calcium hydroxide as a main component regenerated by the regeneration device 60 to the upstream reactant supplier 20f and the downstream reactant supplier 20b.

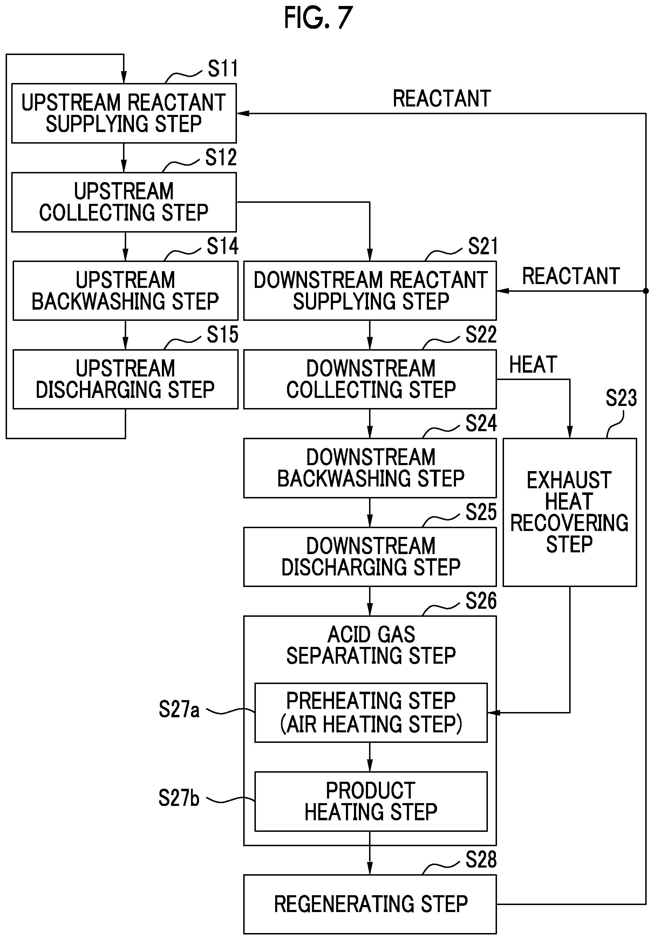

Next, a flow of processing in the exhaust gas treatment facility described above will be described with reference to a flowchart shown in Fig. 7.

The acid gas (including CO₂, SO₂, and HCl) in the upstream exhaust gas EGf reacts with the upstream reactant RSf to generate an upstream reaction product in the process of passing through the upstream exhaust gas line 2f, the inlet-side space 12i of the upstream dust collection filter device 10f, and the layer of the solid adhering to the dust collection filter 13. The upstream reaction product adheres to the surface of the dust collection filter 13 as a part of the solid SSf. The upstream reaction product includes calcium carbonate (CaCO₃) generated by the reaction of carbon dioxide (CO₂), calcium sulfides generated by the reaction of sulfur dioxide (SO₂), and calcium chlorides generated by the reaction of hydrochloric acid (HCl). Examples of the solid SSf adhering to the surface of the dust collection filter 13 include ash, heavy metals, and the like in addition to the above reaction products.

The upstream reactant supplier 20f supplies the upstream reactant RSf to the upstream exhaust gas EGf flowing through the upstream exhaust gas line 2f (S11: upstream reactant supplying step).

The upstream exhaust gas EGf containing the upstream reactant RSf flows into the inlet-side space 12i of the upstream dust collection filter device 10f through the upstream exhaust gas line 2f. As a result, the solid SSf in the upstream exhaust gas EGf is collected by the dust collection filter 13, and the gas in the upstream exhaust gas EGf flows out from the upstream dust collection filter device 10f as the downstream exhaust gas EGb (S12: upstream collecting step).

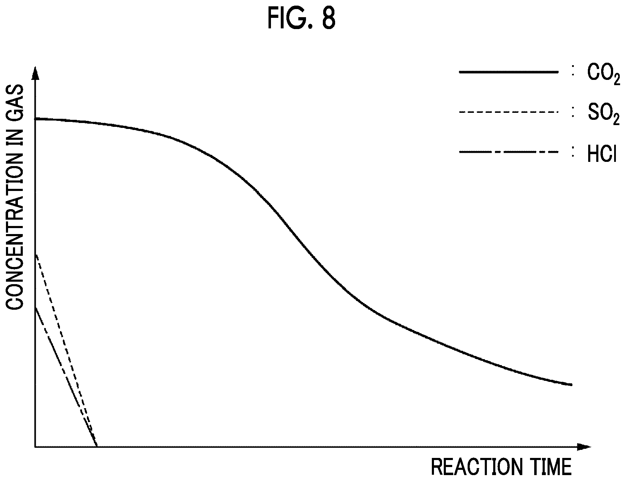

As shown in Fig. 8, for example, under an environment of 400°C, the reaction rate of sulfur disulfide (SO₂) and hydrochloric acid (HCl) in the exhaust gas with respect to calcium hydroxide (Ca(OH)₂, slaked lime) is much higher than the reaction rate of carbon dioxide (CO₂) in the exhaust gas with respect to calcium hydroxide (Ca(OH)₂, slaked lime). Therefore, most of sulfur disulfide (SO₂) and hydrochloric acid (HCl) in the acid gas in the upstream exhaust gas EGf react with the upstream reactant RSf. On the other hand, among the acid gas in the upstream exhaust gas EGf, a part of carbon dioxide (CO₂) reacts with the upstream reactant RSf, but the rest does not react with the upstream reactant RSf and is exhausted from the upstream dust collection filter device 10f as a part of the downstream exhaust gas EGb. Therefore, the downstream exhaust gas EGb contains carbon dioxide (CO₂), but hardly contains sulfur disulfide (SO₂) and hydrochloric acid (HCl). In addition, since ash and heavy metals contained in the upstream exhaust gas EGf are collected by the upstream dust collection filter device 10f, ash and heavy metals are hardly contained in the downstream exhaust gas EGb.

When the layer of the solid SSf adhering to the dust collection filter 13 of the upstream dust collection filter device 10f becomes thick and the differential pressure between the inlet-side space 12i and the outlet-side space 12o in the upstream dust collection filter device 10f increases, or when a predetermined time has elapsed from the previous backwashing, the upstream backwashing step S14 is performed. By performing the upstream backwashing step S14, the solid SSf adhering to the dust collection filter 13 of the upstream dust collection filter device 10f is peeled off from the dust collection filter 13, and the solid SSf falls in the inlet-side space 12i of the upstream dust collection filter device 10f. The solid SSf falling in the inlet-side space 12i is discharged to the outside of the upstream dust collection filter device 10f by the discharger 15 and recovered (S15: upstream discharging step).

As described above, the solid SSf discharged from the upstream dust collection filter device 10f contains ash, heavy metals, and the like in addition to calcium carbonate (CaCO₃), calcium sulfides, and calcium chlorides.

The downstream reactant supplier 20b supplies the downstream reactant RSb to the downstream exhaust gas EGb flowing through the downstream exhaust gas line 2b (S21: downstream reactant supplying step).

The downstream exhaust gas EGb containing the downstream reactant RSb flows into the inlet-side space 12i of the downstream dust collection filter device 10b through the downstream exhaust gas line 2b. As a result, the solid SSb in the downstream exhaust gas EGb is collected by the dust collection filter 13, and the gas in the downstream exhaust gas EGb flows out from the downstream dust collection filter device 10b as the treated exhaust gas EGt (S22: downstream collecting step).

The carbon dioxide (CO₂) in the downstream exhaust gas EGb reacts with the downstream reactant RSb to generate a reaction product in the process of passing through the downstream exhaust gas line 2b, the inlet-side space 12i of the downstream dust collection filter device 10b, and the layer of solid adhering to the dust collection filter 13. The reaction product adheres to the surface of the dust collection filter 13 as a part of the solid SSb. The reaction product is calcium carbonate (CaCO₃) generated by the reaction of carbon dioxide (CO₂). As described above, sulfur disulfide (SO₂) and hydrochloric acid (HCl) are hardly contained in the downstream exhaust gas EGb. Therefore, the reaction efficiency between the downstream reactant RSb and carbon dioxide (CO₂) can be increased. Further, the reaction product hardly contains calcium sulfides generated by the reaction of sulfur dioxide (SO₂) and calcium chlorides generated by the reaction of hydrochloric acid (HCl).

The treated exhaust gas EGt is exhausted from the stack 3 to the outside through the treated exhaust gas line 2t and the exhaust heat recovery device 5. The exhaust heat recovery device 5 heats the heating medium by exchanging heat between the treated exhaust gas EGt and the heating medium (S23: exhaust heat recovering step).

When the layer of the solid SSb adhering to the dust collection filter 13 of the downstream dust collection filter device 10b becomes thick and the differential pressure between the inlet-side space 12i and the outlet-side space 12o in the upstream dust collection filter device 10f becomes large, or when a predetermined time has elapsed from the previous backwashing, the downstream backwashing step S24 is performed. By performing the downstream backwashing step S24, the solid SSb adhering to the dust collection filter 13 of the downstream dust collection filter device 10b is peeled off from the dust collection filter 13, and the solid SSb falls in the inlet-side space 12i of the downstream dust collection filter device 10b. The solids SSb falling in the inlet-side space 12i are discharged to the outside of the downstream dust collection filter device 10b by the discharger 15 and recovered (S25: downstream discharging step).

The solid SSb discharged from the downstream dust collection filter device 10b enters the acid gas separation device 30b, and the acid gas separating step S26 is performed by the acid gas separation device 30b. In the acid gas separating step S26, similarly to the heating step S7 of the acid gas separating step S6 in the first embodiment, a preheating step, an air heating step (exhaust heat utilizing step) S27a, and a product heating step S27b are performed. However, in the acid gas separating step S26, the carbon dioxide separating step S8 of the acid gas separating step S6 in the first embodiment may not be performed. In the first embodiment, the acid gas generated by performing the product heating step S7b contains carbon dioxide (CO₂), sulfur dioxide (SO₂), and hydrochloric acid (HCl). Therefore, in the first embodiment, the carbon dioxide separating step S8 is performed in order to separate carbon dioxide (CO₂) from the acid gas.

When the solid SSb is heated in the product heating step S27b of the acid gas separating step S26 in the present embodiment, the reaction product in the solid SSb is decomposed, and the heated solid SSh and the acid gas are generated. As described above, the solid SSb discharged from the downstream dust collection filter device 10b contains calcium carbonate (CaCO₃), but hardly contains calcium sulfides, calcium chlorides, ash, heavy metals, and the like. Therefore, in the heated solid SSh in the present embodiment, calcium oxide (CaO) generated by thermal decomposition of calcium carbonate (CaCO₃) is a main component, and other components are trace amounts. Further, in the present embodiment, calcium oxide (CaO, quicklime) and carbon dioxide (CO₂) are generated by thermal decomposition of calcium carbonate (CaCO₃) which is a reaction product in the solid SSb discharged from the downstream dust collection filter device 10b, but sulfur dioxide (SO₂) and hydrochloric acid (HCl) are hardly generated by thermal decomposition of calcium sulfides and calcium chlorides. Therefore, in the present embodiment, the carbon dioxide separating step S8 in the first embodiment may not be performed. In other words, the carbon dioxide separating step S8 may be performed as necessary.

The heated solid SSh containing calcium oxide (CaO) as a main component is sent from the acid gas separation device 30b to the regeneration device 60. The regeneration device 60 supplies water or steam to the heated solid SSh. Calcium oxide (CaO, quicklime), which is a main component of the heated solid SSh, reacts with water or steam to become calcium hydroxide (Ca(OH)₂, slaked lime) as described above (S28: regenerating step).

Calcium hydroxide (Ca(OH)₂, slaked lime) is the upstream reactant RSf and the downstream reactant RSb in the present embodiment. A product containing calcium hydroxide (Ca(OH)₂, slaked lime) as a main component, which is a reactant, is sent from the regeneration device 60 to the storage portion 21 of the upstream reactant supplier 20f and the storage portion 21 of the downstream reactant supplier 20b. The supply portion 22 of the upstream reactant supplier 20f pneumatically conveys a product containing the reactant RS stored in the storage portion 21 as a main component into the upstream exhaust gas EGf flowing through the upstream exhaust gas line 2f. That is, the upstream reactant supplier 20f supplies the upstream reactant RSf to the upstream exhaust gas EGf flowing through the upstream exhaust gas line 2f (S11: upstream reactant supplying step). The supply portion 22 of the downstream reactant supplier 20b pneumatically conveys a product containing the reactant RS stored in the storage portion 21 as a main component into the downstream exhaust gas EGb flowing through the downstream exhaust gas line 2b. That is, the downstream reactant supplier 20b supplies the downstream reactant RSb to the downstream exhaust gas EGb flowing through the downstream exhaust gas line 2b (S21: downstream reactant supplying step).

As described above, also in the present embodiment, similarly to the first embodiment, since the reactant is supplied into the exhaust gas and the solid in the exhaust gas is collected by the dust collection filter devices 10f and 10b, it is possible to remove the acid gas (including carbon dioxide) in the exhaust gas together with the fine powder in the exhaust gas.

Further, also in the present embodiment, similarly to the first embodiment, since the reactant is regenerated from the reaction product generated by the reaction with the reactant, the consumption amount of the reactant can be suppressed. Moreover, in the present embodiment, since the reactant is regenerated from the solid SSb that contains the reaction product and hardly contains heavy metals and the like, a high-purity reactant that does not contain heavy metals and the like can be supplied into the exhaust gas EG. Furthermore, in the present embodiment, carbon dioxide with high purity can be recovered without performing a complicated separating step.

As described above, the exhaust gas treatment facility according to the present embodiment includes the two dust collection filter devices 10f and 10b in order to supply a high-purity reactant not containing heavy metals or the like into the exhaust gas. However, since the two dust collection filter devices 10f and 10b have different roles, the size of each of the dust collection filter devices 10f and 10b can be made smaller than the size of the dust collection filter device 10 in the first embodiment. The main role of the upstream dust collection filter device 10f in the present embodiment is to collect calcium sulfides, calcium chlorides, ash, heavy metals, and the like. The main role of the downstream dust collection filter device 10b in the present embodiment is to collect calcium carbonate (CaCO₃). In addition, in the acid gas separating step S26 in the present embodiment, the carbon dioxide separating step S8 of the acid gas separating step S6 in the first embodiment can be omitted. Therefore, in the acid gas separation device 30b of the present embodiment, the carbon dioxide separation device 51 of the acid gas separation devices 30 and 30a in the first embodiment can be omitted. Therefore, in the present embodiment, although two dust collection filter devices 10 are provided, an increase in facility cost can be suppressed.

### [Third Embodiment]

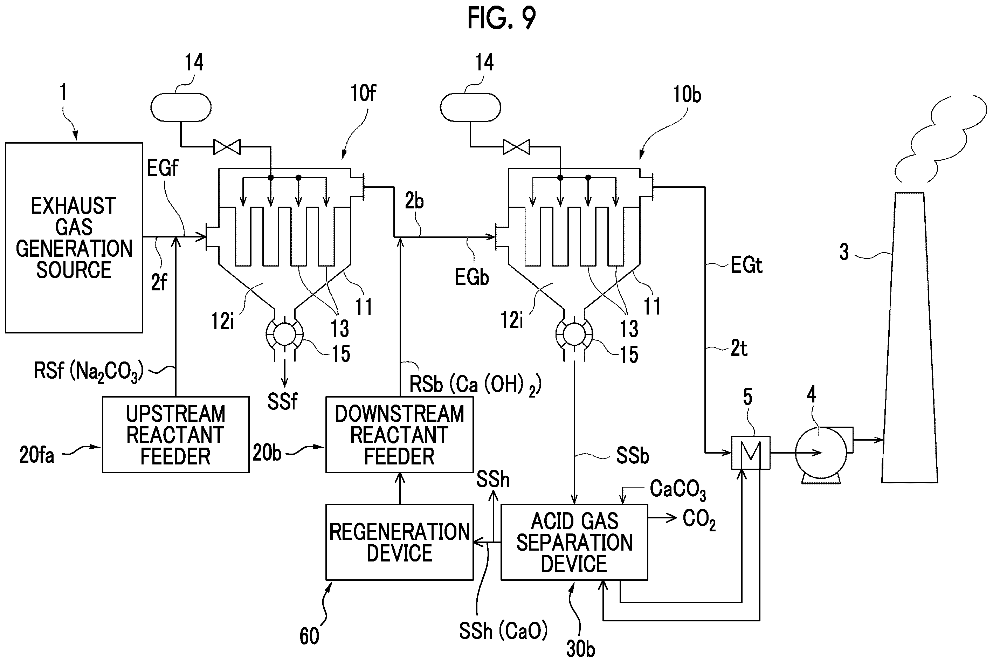

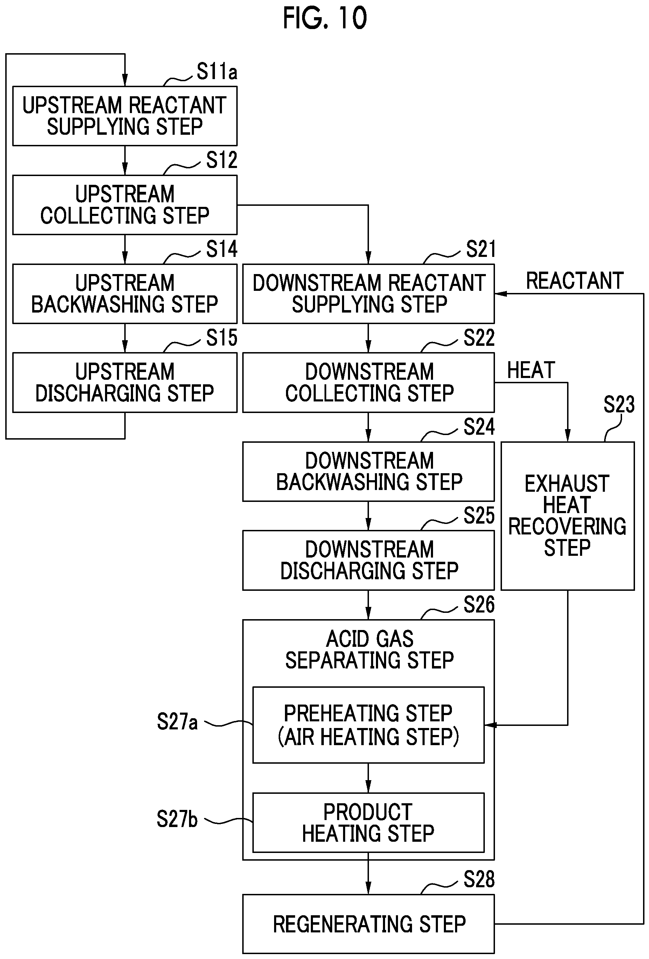

Next, a third embodiment of a method for treating an exhaust gas according to the present disclosure and facility for carrying out the method will be described with reference to Figs. 9 and 10.

As shown in Fig. 9, similarly to the exhaust gas treatment facility in the second embodiment, the exhaust gas treatment facility in the present embodiment includes an upstream dust collection filter device 10f, an upstream exhaust gas line 2f, a downstream dust collection filter device 10b, a downstream exhaust gas line 2b, a treated exhaust gas line 2t, a stack 3, a suction blower 4, an exhaust heat recovery device 5, an upstream reactant supplier 20fa, a downstream reactant supplier 20b, an acid gas separation device 30b, and a regeneration device 60.

The upstream reactant supplier 20f in the second embodiment supplies calcium hydroxide (Ca(OH)₂, slaked lime) from the regeneration device 60 to the upstream exhaust gas line 2f as the upstream reactant RSf. However, the upstream reactant supplier 20fa in the present embodiment supplies the metal carbonate to the upstream exhaust gas line 2f. The exhaust gas treatment facility in the present embodiment is different from the exhaust gas treatment facility in the second embodiment only in this point.

The upstream reactant supplier 20fa in the present embodiment has basically the same configuration as the upstream reactant supplier 20f in the second embodiment. Therefore, as shown in Fig. 4, the upstream reactant supplier 20fa includes a storage portion 21 capable of storing the upstream reactant RSf, and a supply portion 22 capable of supplying the upstream reactant RSf stored in the storage portion 21 into the upstream exhaust gas EGf. However, the storage portion 21 of the upstream reactant supplier 20fa in the present embodiment stores the above-described metal carbonate as the upstream reactant RSf. For this reason, the supply portion 22 of the upstream reactant supplier 20fa in the present embodiment supplies the metal carbonate as the upstream reactant RSf into the upstream exhaust gas EGf. In Fig. 4, the upstream reactant supplier 20fa is illustrated to receive the reactant from the regeneration device 60, but the upstream reactant supplier 20fa does not receive the reactant from the regeneration device 60.

Examples of the metal carbonate used in the present embodiment include calcium carbonate (CaCO₃), sodium carbonate (Na₂CO₃), magnesium carbonate (MgCO₃), barium carbonate (BaCO₃), potassium carbonate (K₂CO₃), calcium hydrogen carbonate (Ca(HCO₃)₂), sodium hydrogen carbonate (sodium bicarbonate, baking soda) (NaHCO₃), magnesium hydrogen carbonate (Mg(HCO₃)₂), barium hydrogen carbonate (Ba (HCO₃)₂), and potassium hydrogen carbonate (KHCO₃).

Next, a flow of processing in the exhaust gas treatment facility described above will be described with reference to a flowchart shown in Fig. 10.

The upstream reactant supplier 20fa supplies the upstream reactant RSf to the upstream exhaust gas EGf flowing through the upstream exhaust gas line 2f (S11a: upstream reactant supplying step).

The upstream exhaust gas EGf containing the upstream reactant RSf flows into the inlet-side space 12i of the upstream dust collection filter device 10f through the upstream exhaust gas line 2f. As a result, the solid SSf in the upstream exhaust gas EGf is collected by the dust collection filter 13, and the gas in the upstream exhaust gas EGf flows out from the upstream dust collection filter device 10f as the downstream exhaust gas EGb (S12: upstream collecting step).

The acid gas (including CO₂, SO₂, and HCl) in the upstream exhaust gas EGf reacts with the upstream reactant RSf to generate an upstream reaction product in the process of passing through the upstream exhaust gas line 2f, the inlet-side space 12i of the upstream dust collection filter device 10f, and the layer of the solid adhering to the dust collection filter 13. The upstream reaction product adheres to the surface of the dust collection filter 13 as a part of the solid SSf. It is assumed that sodium hydrogen carbonate (sodium bicarbonate, baking soda) (NaHCO₃), which is a kind of metal carbonate, is used as the upstream reactant RSf. In this case, as shown below, the upstream reaction product includes sodium sulfides such as sodium sulfate (Na₂SO₄) and carbon dioxide (CO₂) generated by the reaction between the upstream reactant RSf (NaHCO₃) and sulfur dioxide (SO₂), and sodium chlorides such as sodium chloride (NaCl) and carbon dioxide (CO₂) generated by the reaction between the upstream reactant RSf (NaHCO₃) and hydrochloric acid (HCl). The carbon dioxide generated by this reaction is recovered as carbonate by the downstream dust collection filter device 10b as described later.

Examples of the solid SSf adhering to the surface of the dust collection filter 13 of the upstream dust collection filter device 10f include ash, heavy metals, and the like in addition to sodium sulfides and sodium chlorides among the upstream reaction products described above. In addition, among the upstream products described above, carbon dioxide (CO₂) which is a gas passes through the dust collection filter 13 of the upstream dust collection filter device 10f and flows out from the upstream dust collection filter device 10f to the downstream exhaust gas line 2b.

Thereafter, as in the second embodiment, the upstream backwashing step S14 and the upstream discharging step S15 are performed.

Similarly to the second embodiment, the downstream reactant supplier 20b supplies the downstream reactant RSb to the downstream exhaust gas EGb flowing through the downstream exhaust gas line 2b (S21: reactant supplying step).

The downstream exhaust gas EGb containing the downstream reactant RSb flows into the inlet-side space 12i of the downstream dust collection filter device 10b through the downstream exhaust gas line 2b. As a result, the solid SSb in the downstream exhaust gas EGb is collected by the dust collection filter 13, and the gas in the downstream exhaust gas EGb flows out from the downstream dust collection filter device 10b as the treated exhaust gas EGt (S22: downstream collecting step).

The carbon dioxide (CO₂) in the downstream exhaust gas EGb reacts with the downstream reactant RSb to generate a reaction product in the process of passing through the downstream exhaust gas line 2b, the inlet-side space 12i of the downstream dust collection filter device 10b, and the layer of solid adhering to the dust collection filter 13. The reaction product adheres to the surface of the dust collection filter 13 as a part of the solid SSb. The reaction product is calcium carbonate (CaCO₃) generated by the reaction of carbon dioxide (CO₂). As described above, sulfur disulfide (SO₂) and hydrochloric acid (HCl) are hardly contained in the downstream exhaust gas EGb. Therefore, the reaction efficiency between the downstream reactant RSb and carbon dioxide (CO₂) can be increased. Further, the reaction product hardly contains calcium sulfides generated by the reaction of sulfur dioxide (SO₂) and calcium chlorides generated by the reaction of hydrochloric acid (HCl).

Thereafter, similarly to the second embodiment, the exhaust heat recovering step S23, the downstream backwashing step S24, the downstream discharging step S25, the acid gas separating step S26, and the regenerating step S28 are performed. The reactant regenerated in the regenerating step S28 of the present embodiment is supplied only to the downstream reactant supplier 20b as the downstream reactant RSb.

As described above, also in the present embodiment, the reactant is supplied into the exhaust gas, and the solid in the exhaust gas is collected by the dust collection filter devices 10f and 10b, as in each of the above embodiments. Therefore, the acid gas (including carbon dioxide) in the exhaust gas EG can be removed together with the fine powder in the exhaust gas EG.

Further, also in the present embodiment, similarly to each of the above embodiments, since the reactant is regenerated from the reaction product generated by the reaction with the reactant, the consumption amount of the reactant can be suppressed. Moreover, in the present embodiment, similarly to the second embodiment, since the reactant is regenerated from the solid SSb that contains the reaction product and hardly contains heavy metals and the like, it is possible to supply a high-purity reactant that does not contain heavy metals and the like into the exhaust gas EG. Furthermore, in the present embodiment, carbon dioxide with high purity can be recovered without performing a complicated separating step.

The exhaust gas treatment facility in the present embodiment also includes two dust collection filter devices 10 as in the second embodiment, but can suppress an increase in facility cost.

### [Fourth Embodiment]

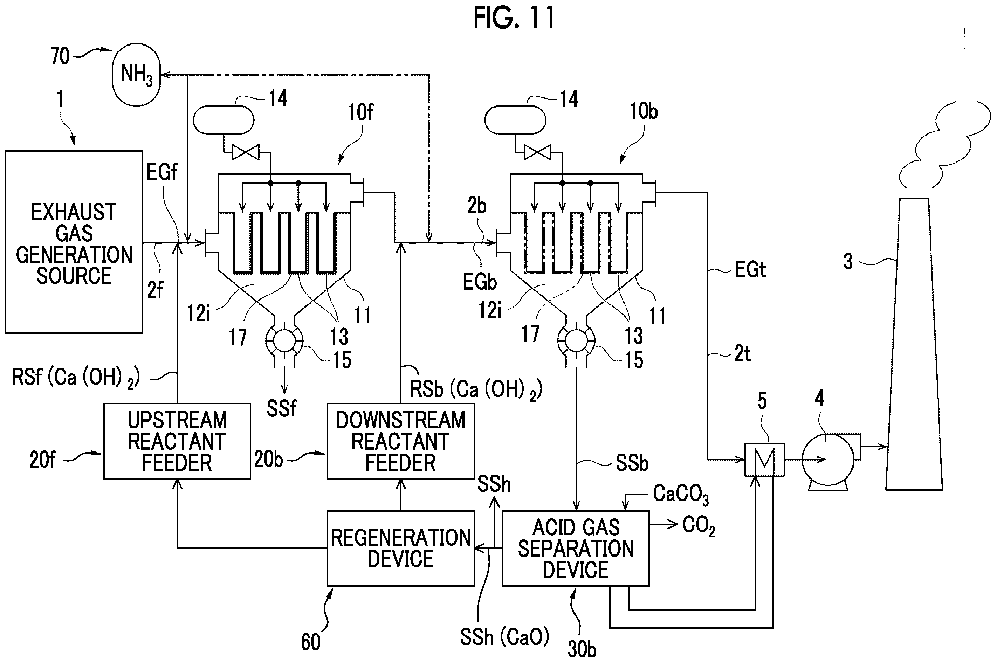

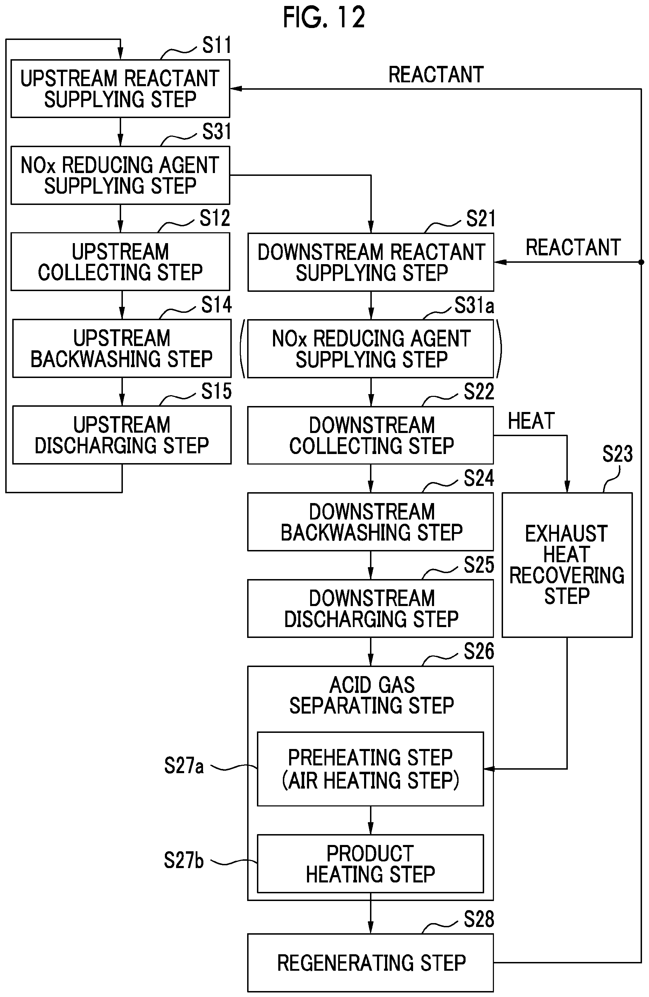

Next, a fourth embodiment of the method for treating the exhaust gas EG according to the present disclosure and facility for carrying out the method will be described with reference to Figs. 11 and 12.

As shown in Fig. 11, the exhaust gas treatment facility in the present embodiment is a facility in which a NOx reducing agent supplier 70 is added to the exhaust gas treatment facility in the second embodiment.

The NOx reducing agent supplier 70 can supply the NOx reducing agent into the upstream exhaust gas line 2f.

A reduction catalyst 17 is supported on the dust collection filter 13 of the upstream dust collection filter device 10f. The reduction catalyst 17 includes a support and an active component. The support is, for example, a single oxide or a composite oxide containing at least one element selected from titanium, silicon, aluminum, zirconium, and cerium. The active component is, for example, a single oxide, a composite oxide, or an alloy containing at least one element selected from vanadium, tungsten, molybdenum, barium, potassium, platinum, copper, silver, rhodium, and palladium.

Next, a flow of processing in the exhaust gas treatment facility described above will be described with reference to a flowchart shown in Fig. 12.

The upstream reactant supplier 20f supplies the upstream reactant RSf to the upstream exhaust gas EGf flowing through the upstream exhaust gas line 2f (S11: upstream reactant supplying step). Further, the NOx reducing agent supplier 70 supplies the NOx reducing agent to the upstream exhaust gas EGf flowing through the upstream exhaust gas line 2f (S31: NOx reducing agent supplying step). The NOx reducing agent is, for example, a substance containing at least one of ammonia, hydrocarbon, carbon monoxide, and hydrogen.

The upstream exhaust gas EGf containing the upstream reactant RSf and the NOx reducing agent flows into the inlet-side space 12i of the upstream dust collection filter device 10f through the upstream exhaust gas line 2f. As a result, the solid SSf in the upstream exhaust gas EGf is collected by the dust collection filter 13, and the gas in the upstream exhaust gas EGf flows out from the upstream dust collection filter device 10f as the downstream exhaust gas EGb (S12: upstream collecting step).

Here, when ammonia is used as the NOx reducing agent, nitrogen monoxide in the upstream exhaust gas EGf reacts with ammonia, which is the NOx reducing agent in the upstream exhaust gas EGf, in an environment in which the reduction catalyst 17 is present, and becomes nitrogen (N₂) and water (H₂O), as shown below.

4NO+4NH₃+O₂→4N₂+6H₂O

Hereinafter, similarly to the second embodiment, the upstream backwashing step S14, the upstream discharging step S15, the downstream reactant supplying step S21, the downstream collecting step S2, the exhaust heat recovering step S23, the downstream backwashing step S24, the downstream discharging step S25, the acid gas separating step S26, and the regenerating step S28 are performed.

Since the exhaust gas treatment facility of the present embodiment includes all the configurations of the exhaust gas treatment facility of the second embodiment, the same effects as those of the second embodiment can be obtained.

Furthermore, in the present embodiment, nitrogen monoxide in the upstream exhaust gas EGf can be removed.

As described above, in the present embodiment, the NOx reducing agent is supplied to the upstream exhaust gas EGf in the upstream exhaust gas line 2f. However, if the NOx reducing agent is supplied to at least one of the upstream exhaust gas EGf in the upstream exhaust gas line 2f and the downstream exhaust gas EGb in the downstream exhaust gas line 2b, nitrogen monoxide can be removed from the exhaust gas EG. Therefore, the NOx reducing agent supplier 70 may supply the NOx reducing agent to the downstream exhaust gas EGb flowing through the downstream exhaust gas line 2b (S31a: NOx reducing agent supplying step). When the NOx reducing agent is supplied to the downstream exhaust gas EGb in the downstream exhaust gas line 2b, it is necessary to support the reduction catalyst 17 on the dust collection filter 13 of the downstream dust collection filter device 10b.

As described above, the present embodiment is a facility in which the NOx reducing agent supplier 70 is added to the exhaust gas treatment facility in the second embodiment. However, the NOx reducing agent supplier 70 may be added to the exhaust gas treatment facility in the first embodiment and the third embodiment.

In the above embodiments, the preheaters 36 and 49 and the air heater 47 are exemplified as the exhaust heat utilization devices. However, other devices may be the exhaust heat utilization devices. For example, the heater 63 or the air heater 26 illustrated in Fig. 4 may be an exhaust heat utilization device that uses the heating medium heated by the exhaust heat recovery device 5 as the heating medium. That is, any one of the reactant supplier 20, 20f, 20fa, and 20b, the acid gas separation devices 30, 30a, and 30b, and the regeneration device 60 may have the exhaust heat utilization device. In other words, any one of the reactant supplying step, the heating step, and the regenerating step may include the exhaust heat utilizing step.

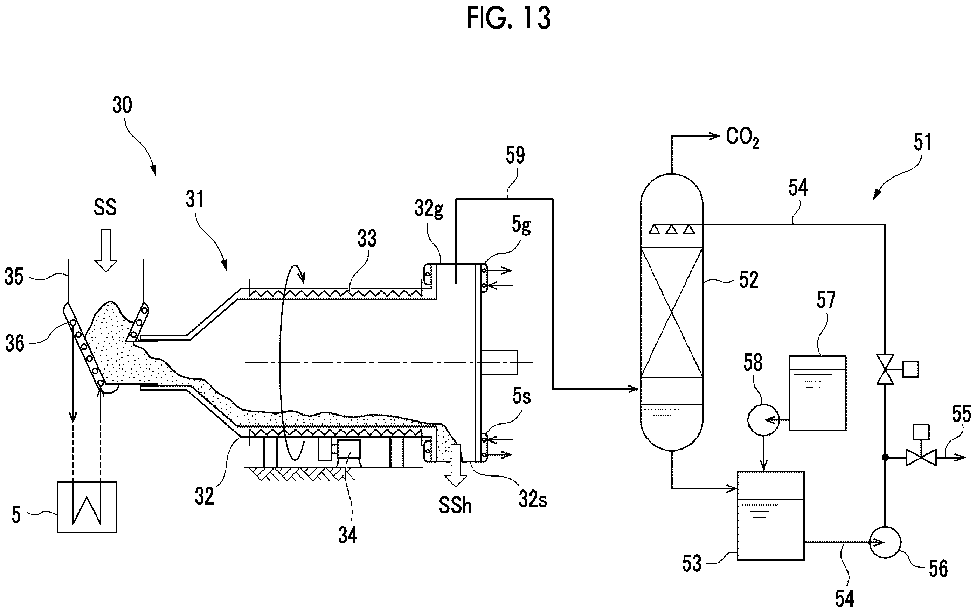

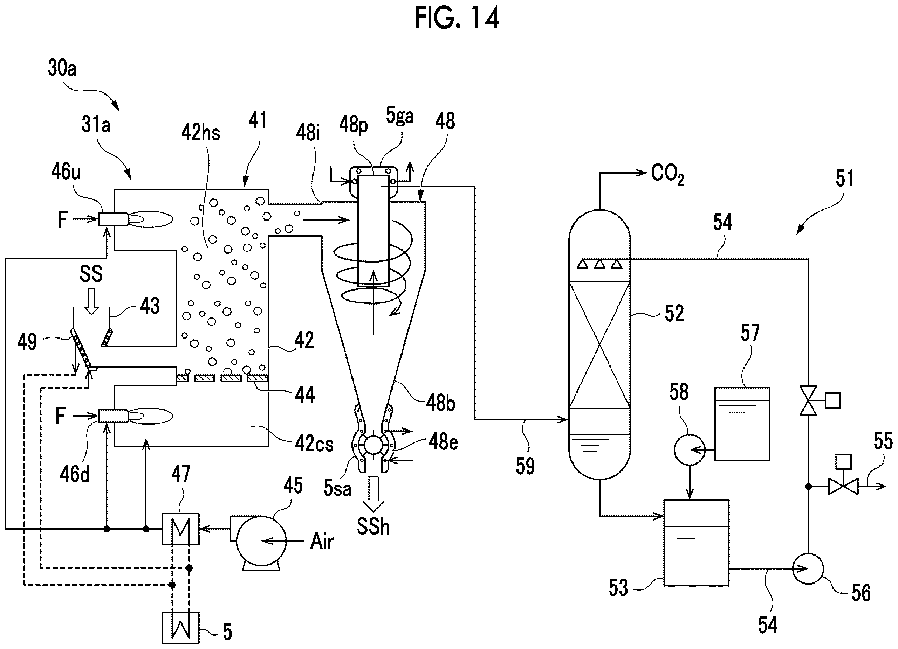

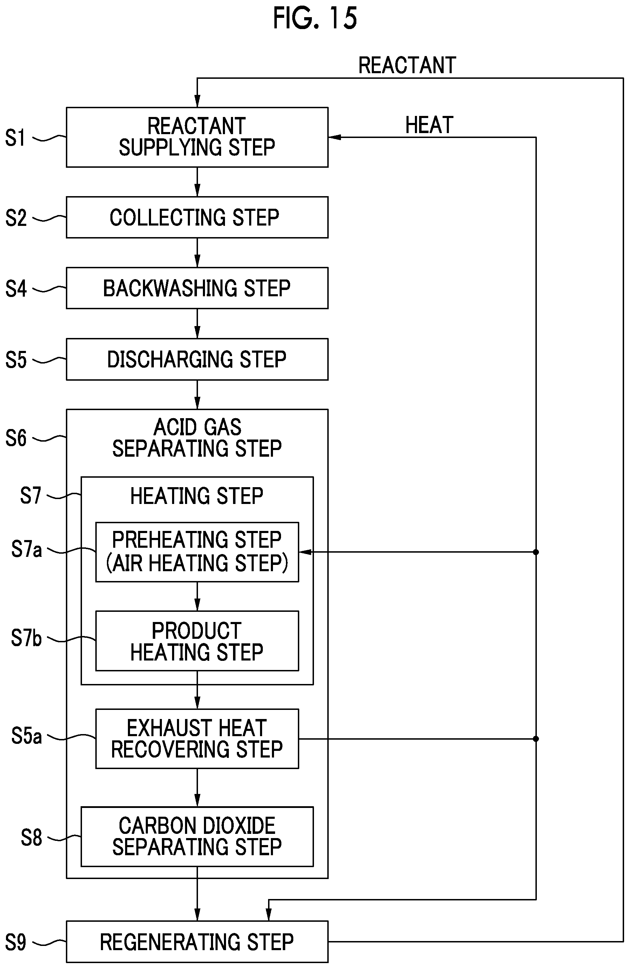

Further, the exhaust heat recovery device 5 in the above embodiment is a heat exchanger that heats the heating medium by exchanging heat between the treated exhaust gas EGt flowing through the treated exhaust gas line 2t and the heating medium. However, as illustrated in Fig. 13, the exhaust heat recovery devices 5g and 5s may be heat exchangers capable of heating the heating medium by exchanging heat between the gas generated by the heating device 31 of the acid gas separation device 30 and the heating medium. As illustrated in Fig. 14, the exhaust heat recovery devices 5ga and 5sa may be heat exchangers capable of heating the heating medium by exchanging heat between the heated solid generated by the heating device 31a of the acid gas separation device 30a and the heating medium. Specifically, the exhaust heat recovery devices 5g, 5ga, 5s, and 5sa are provided around the gas exhaust port or the solid discharge port in the heating devices 31 and 31a. In this case, as shown in the flowchart of Fig. 15, the exhaust heat recovery devices 5g, 5ga, 5s, and 5sa heat the heating medium by exchanging heat between the heated solid or gas generated in the product heating step S7b and the heating medium (exhaust heat recovering step S5a). As the exhaust heat utilization device using the heating medium recovered by the exhaust heat recovery devices 5g, 5ga, 5s, and 5sa, any one of the reactant supplier 20, 20f, 20fa, and 20b, the acid gas separation devices 30, 30a, and 30b, and the regeneration device 60 may have the exhaust heat utilization device as described above. In other words, any one of the reactant supplying step, the heating step, and the regenerating step may include the exhaust heat utilizing step.

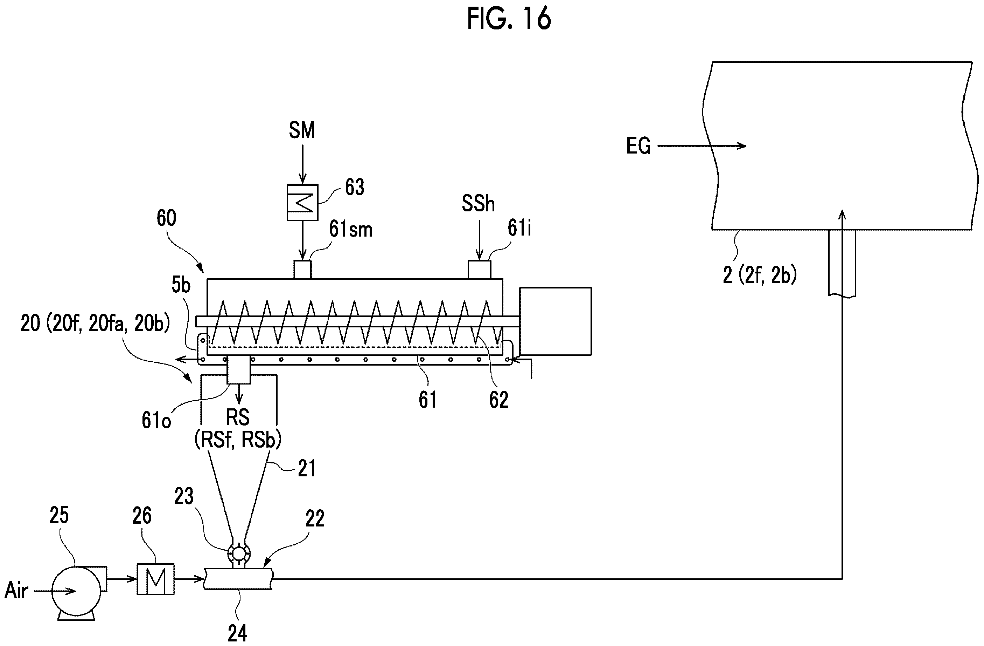

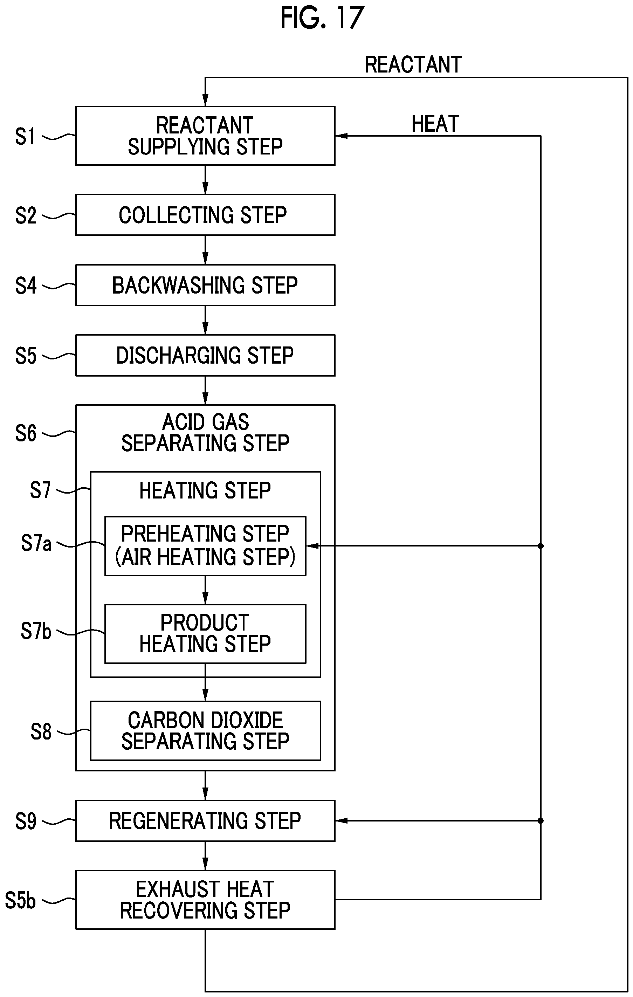

As shown in Fig. 16, the exhaust heat recovery device 5b may be a heat exchanger capable of heating a heating medium by causing the heating medium to absorb a part of reaction heat generated when water or steam is supplied to the basic oxide in the regeneration device 60. Specifically, the exhaust heat recovery device 5b is provided around the reaction container 61 or inside the reaction container 61 in the regeneration device 60. In this case, as shown in the flowchart of Fig. 17, the exhaust heat recovery device 5b causes the heating medium to absorb a part of the reaction heat generated when water or steam is supplied to the basic oxide in the regenerating step S9, thereby heating the heating medium (exhaust heat recovering step S5b). As the exhaust heat utilization device using the heating medium recovered by the exhaust heat recovery device, any one of the reactant supplier 20, 20f, 20fa, and 20b, the acid gas separation devices 30, 30a, and 30b, and the regeneration device 60 may have the exhaust heat utilization device as described above. In other words, any one of the reactant supplying step, the heating step, and the regenerating step may include the exhaust heat utilizing step.

The exhaust heat utilization device described above is one of the devices constituting the exhaust gas treatment facility. However, the exhaust heat utilization device may utilize the heat of the heating medium heated by the exhaust heat recovery device in another device or another facility other than the device constituting the exhaust gas treatment facility. In other words, the exhaust heat utilizing step of utilizing heat of the heating medium heated in the exhaust heat recovering step may be performed in a step other than the steps performed in the method for treating an exhaust gas. For example, the heat of the heating medium heated by the exhaust heat recovery device may be used in a hot water supply facility or a power generation facility of a management building that manages the exhaust gas treatment facility.

The exhaust gas treatment facility in the second to fourth embodiments described above includes one downstream dust collection filter device 10b. However, in order to more efficiently react the supplied reactant with carbon dioxide and the like in the exhaust gas, a plurality of downstream dust collection filter devices 10b may be provided. In this case, the reactant is supplied to the exhaust gas flowing into each of the downstream dust collection filter devices 10b.

Although the embodiments of the present disclosure have been described in detail above, the present disclosure is not limited to the above-described embodiments. Various additions, modifications, substitutions, partial deletions, and the like can be made without departing from the conceptual idea and gist of the present invention derived from the contents defined in the claims and equivalents thereof.

### [Supplementary Note]

The exhaust gas treatment facility according to the above embodiment is understood as follows, for example.
(1) A exhaust gas treatment facility according to a first aspect includes
   a dust collection filter device 10, 10b, an exhaust gas line 2, 2b capable of introducing an exhaust gas EG, EGb containing an acid gas that contains carbon dioxide into the dust collection filter device 10, 10b, and a reactant supplier 20, 20b capable of supplying a reactant RS, RSb capable of reacting with carbon dioxide into the exhaust gas EG, EGb. The dust collection filter device 10, 10b includes a case 11 in which an inlet 11i through which a gas flows in and an outlet 11o through which a gas flows out are formed, and a dust collection filter 13 that partitions an inside of the case 11 into an inlet-side space 12i on a side of the inlet 11i and an outlet-side space 12o on a side of the outlet 11o and has heat resistance of 250°C or higher. The exhaust gas line 2, 2b is connected to the inlet 11i of the dust collection filter device 10, 10b. The reactant supplier 20, 20b is capable of supplying the reactant RS, RSb into the exhaust gas line 2, 2b or into the inlet-side space 12i.

The carbon dioxide in the exhaust gas EG, EGb reacts with the reactant RS, RSb to form reaction products. The reaction products are collected by the dust collection filter 13 of the dust collection filter device 10 10b as solid SS, SSb together with fine powders such as ash and heavy metals contained in the exhaust gas. Therefore, in the present aspect, carbon dioxide in the exhaust gas EG, EGb can be removed together with the fine powder in the exhaust gas EG, EGb.

In order to increase the reaction efficiency between the carbon dioxide in the exhaust gas EG, EGb and the reactant RS, RSb, it is desirable that the reaction environment be 250°C or higher. In the present aspect, since the dust collection filter 13 having heat resistance of 250°C or higher is used, the exhaust gas EG, EGb of 250°C or more can flow into the dust collection filter device 10, 10b. That is, in the present aspect, the reaction environment between the carbon dioxide in the exhaust gas EG, EGb and the reactant RS, RSb can be set to 250°C or higher. Therefore, in the present aspect, the removal efficiency of carbon dioxide from the exhaust gas EG, EGb can be increased.

(2) The exhaust gas treatment facility according to a second aspect,
in the exhaust gas treatment facility according to the first aspect, the reactant supplier 20, 20b is connected to the exhaust gas line 2, 2b and is capable of supplying the reactant RS, RSb into the exhaust gas line 2, 2b.

When the reactant RS, RSb is supplied to the exhaust gas line 2, 2b, a space in which the reactant RS, RSb can react with carbon dioxide in the exhaust gas EG, EGb becomes the inside of the exhaust gas line 2, 2b and the inlet-side space 12i of the dust collection filter device 10, 10b. Therefore, in the present aspect, the space in which the reactant RS, RSb can react is wider than in the case where the reactant RS, RSb are directly supplied to the inlet-side space 12i of the dust collection filter device 10, 10b, and the reaction efficiency between the reactant RS, RSb and the carbon dioxide in the exhaust gas EG, EGb can be increased.

(3) The exhaust gas treatment facility according to a third aspect further includes,
in the exhaust gas treatment facility according to the first aspect or the second aspect, an upstream dust collection filter device 10f in addition to a downstream dust collection filter device 10b as the dust collection filter device 10b, an upstream exhaust gas line 2f capable of introducing an upstream exhaust gas EGf containing an acid gas that contains carbon dioxide into the upstream dust collection filter device 10f, in addition to a downstream exhaust gas line 2b as the exhaust gas line 2b, and an upstream reactant supplier 20f capable of supplying an upstream reactant RSf capable of reacting with the acid gas into the upstream exhaust gas EGf, in addition to a downstream reactant supplier 20b as the reactant supplier 20b. The upstream dust collection filter device 10f includes a case 11 in which an inlet 11i through which a gas flows in and an outlet 11o through which a gas flows out are formed; and a dust collection filter 13 that partitions an inside of the case 11 of the upstream dust collection filter device 10f into an inlet-side space 12i on a side of the inlet 11i of the upstream dust collection filter device 10f and an outlet-side space 12o on a side of the outlet 11o of the upstream dust collection filter device 10f and has heat resistance of 250°C or higher. The upstream exhaust gas line 2f is connected to the inlet 11i of the upstream dust collection filter device 10f. The downstream exhaust gas line 2b is connected to the outlet 11o of the upstream dust collection filter device 10f and is connected to the inlet 11i of the downstream dust collection filter device 10b, and is capable of introducing downstream exhaust gas EGb as the exhaust gas EGb into the downstream dust collection filter device 10b. The upstream reactant supplier 20f can supply the upstream reactant RSf to the upstream exhaust gas line 2f and/or the inlet-side space 12i of the upstream dust collection filter device 10f.

The upstream dust collection filter device 10f of the present aspect can collect ash and heavy metals in addition to the reaction product of the acid gas and the upstream reactant RSf in the upstream exhaust gas EGf. In addition, in the downstream dust collection filter device 10b of the present aspect, it is possible to exclusively collect the reaction product between the acid gas that has not reacted with the upstream reactant RSf among the acid gases in the upstream exhaust gas EGf and the downstream reactant RSb.

(4) The exhaust gas treatment facility according to a fourth aspect,
in the exhaust gas treatment facility according to the third aspect, the upstream reactant supplier 20f includes a storage portion 21 capable of storing a metal carbonate or a metal bicarbonate as the upstream reactant RSf, and a supply portion 22 capable of supplying the metal carbonate or the metal bicarbonate stored in the storage portion 21 to the upstream exhaust gas line 2f or the inlet-side space 12i of the upstream dust collection filter device 10f.

In the present aspect, when sulfur dioxide and hydrochloric acid are contained as acid gases in the upstream exhaust gas EGf, these can be efficiently collected in the upstream dust collection filter device 10f in the form of reaction products. Further, in the present aspect, since sulfur dioxide and hydrochloric acid are hardly contained in the downstream exhaust gas EGb, the reaction efficiency between carbon dioxide in the downstream exhaust gas EGb and the downstream reactant RSb can be enhanced.

(5) The exhaust gas treatment facility according to a fifth aspect further includes,
in the exhaust gas treatment facility according to the third aspect or the fourth aspect, a NOx reducing agent supplier 70 capable of supplying a NOx reducing agent into the upstream exhaust gas line 2f. A reduction catalyst 17 is attached to the dust collection filter 13 of the upstream dust collection filter device 10f.

In the present aspect, when the upstream exhaust gas EGf contains nitrogen monoxide, the upstream exhaust gas EGf can be decomposed into nitrogen and water.

(6) The exhaust gas treatment facility according to a sixth aspect further includes,
in the exhaust gas treatment facility according to any one of the third aspect to the fifth aspect, a NOx reducing agent supplier 70 capable of supplying a NOx reducing agent into the downstream exhaust gas line 2b. A reduction catalyst 17 is attached to the dust collection filter 13 of the downstream dust collection filter device 10b.

In the present aspect, when the downstream exhaust gas EGb contains nitrogen monoxide, the downstream exhaust gas EGb can be decomposed into nitrogen and water.

(7) The exhaust gas treatment facility according to a seventh aspect further includes,
in the exhaust gas treatment facility according to any one of the first to fourth aspects, a NOx reducing agent supplier 70 capable of supplying a NOx reducing agent into the exhaust gas line 2b. A reduction catalyst 17 is attached to the dust collection filter 13 of the dust collection filter device 10b.

In the present aspect, when the exhaust gas EG contains nitrogen monoxide, the exhaust gas EG can be decomposed into nitrogen and water.

(8) The exhaust gas treatment facility according to an eighth aspect,
in the exhaust gas treatment facility according to any one of the first aspect to the seventh aspect, the reactant supplier 20, 20b includes a storage portion 21 capable of storing a hydroxide, a metal carbonate, a metal bicarbonate, or a metal oxide as the reactant RS, RSb, and a supply portion 22 capable of supplying the hydroxide, the metal carbonate, the metal bicarbonate, or the metal oxide stored in the storage portion 21 of the reactant supplier 20, 20b into the exhaust gas EG, EGb.

(9) The exhaust gas treatment facility according to a ninth aspect,
in the exhaust gas treatment facility according to any one of the first aspect to the eighth aspect, the dust collection filter device 10, 10b includes a backwashing device 14 capable of separating a solid SS, SSb collected by the dust collection filter 13 from the dust collection filter 13 by sending high-pressure gas to the outlet-side space 12o so that the outlet-side space 12o has a higher pressure than the inlet-side space 12i, and a discharger 15 capable of discharging the solid SS, SSb in the inlet-side space 12i separated from the dust collection filter 13 to an outside.

In the present aspect, the solids SS, SSb collected by the dust collection filter 13 of the dust collection filter device 10, 10b can be discharged to the outside of the dust collection filter device 10, 10b.

(10) The exhaust gas treatment facility according to a tenth aspect,
in the exhaust gas treatment facility according to any one of the first aspect to the seventh aspect, the reactant supplier 20, 20b includes a storage portion 21 capable of storing a hydroxide as the reactant RS, RSb, and a supply portion 22 capable of supplying the hydroxide stored in the storage portion 21 of the reactant supplier 20, 20b into the exhaust gas EG, EGb. The dust collection filter device 10, 10b includes a backwashing device 14 capable of separating a solid SS, SSb collected by the dust collection filter 13 from the dust collection filter 13 by sending a high-pressure gas to the outlet-side space 12o so that the outlet-side space 12o has a higher pressure than the inlet-side space 12i, and a discharger 15 capable of discharging the solid SS, SSb in the inlet-side space 12i separated from the dust collection filter 13 to an outside. The exhaust gas treatment facility further includes an acid gas separation device 30, 30a, 30b capable of generating a basic oxide by separating an acid gas from a reaction product of the acid gas contained in the exhaust gas EG, EGb and the hydroxide as the reactant RS, RSb, and a regeneration device 60 capable of generating a hydroxide by supplying water or steam to the basic oxide from the acid gas separation device 30, 30a, 30b. The acid gas separation device 30, 30a, 30b is capable of generating the basic oxide from the reaction product contained in the solid SS, SSb from the discharger 15. The reactant supplier 20, 20b can supply the hydroxide generated in the regeneration device 60 into the exhaust gas EG, EGb.

In the present aspect, the solid SS, SSb as the reaction product generated by the reaction between the carbon dioxide in the exhaust gas EG, EGb and the reactant RS, RSb can be discharged from the dust collection filter device 10, 10b. Furthermore, in the present aspect, since the acid gas separation device 30, 30a, 30b and the regeneration device 60 are provided, hydroxides as the reactant RS, RSb can be regenerated from the reaction products discharged from the dust collection filter device 10, 10b. The reactant supplier 20, 20b of the present aspect can supply the hydroxide from the regeneration device 60 into the exhaust gas EG, EGb. Therefore, in the present aspect, the consumption amount of the hydroxide as the reactant RS, RSb can be suppressed.

(11) The exhaust gas treatment facility according to an eleventh aspect,
in the exhaust gas treatment facility according to the third aspect, the downstream reactant supplier 20b includes a storage portion 21 capable of storing a hydroxide as the reactant RSb, and a supply portion 22 capable of supplying the hydroxide stored in the storage portion 21 of the downstream reactant supplier 20b into the downstream exhaust gas EGb as the exhaust gas EGb. The downstream dust collection filter device 10b includes a backwashing device 14 capable of separating a solid SSb collected by the dust collection filter 13 of the downstream dust collection filter device 10b from the dust collection filter 13 of the downstream dust collection filter device 10b by sending a high-pressure gas to the outlet-side space 12o of the downstream dust collection filter device 10b so that the outlet-side space 12o of the downstream dust collection filter device 10b has a higher pressure than the inlet-side space 12i of the downstream dust collection filter device 10b, and a discharger 15 capable of discharging the solid SSb in the inlet-side space 12i separated from the dust collection filter 13 of the downstream dust collection filter device 10b to an outside. The exhaust gas treatment facility further includes an acid gas separation device 30b capable of generating a basic oxide by separating an acid gas from a reaction product of the acid gas contained in the downstream exhaust gas EGb and the hydroxide as the reactant RSb and a regeneration device 60 capable of generating a hydroxide by supplying water or steam to the basic oxide from the acid gas separation device 30b. The acid gas separation device 30b can generate the basic oxide from the reaction product contained in the solid SSb from the discharger 15. The downstream reactant supplier 20b can supply the hydroxide generated by the regeneration device 60 into the downstream exhaust gas EGb.

The upstream dust collection filter device 10f of the present aspect can collect ash and heavy metals in addition to the reaction product of the acid gas and the upstream reactant RSf in the upstream exhaust gas EGf. In addition, in the downstream dust collection filter device 10b of the present aspect, it is possible to exclusively collect the reaction product between the acid gas that has not reacted with the upstream reactant RSf among the acid gases in the upstream exhaust gas EGf and the hydroxide as the downstream reactant RSb, and discharge the reaction product as the solid SSb from the downstream dust collection filter device 10b. Moreover, in the present aspect, since sulfur dioxide and hydrochloric acid are hardly contained in the downstream exhaust gas EGb, the reaction efficiency between carbon dioxide in the downstream exhaust gas EGb and the downstream reactant RSb can be enhanced.

Furthermore, in the present aspect, since the acid gas separation device 30b and the regeneration device 60 are provided, the hydroxide as the reactant RSb can be regenerated from the reaction product discharged from the downstream dust collection filter device 10b. The downstream reactant supplier 20b of the present aspect can supply the hydroxide from the regeneration device 60 into the downstream exhaust gas EGb. Therefore, in the present aspect, the consumption amount of the hydroxide as the reactant RSb can be suppressed. Moreover, in the present aspect, since the reactant RSb is regenerated from the solid SSb that contains the reaction product and hardly contains heavy metals and the like, it is possible to supply the high-purity reactant RSb that does not contain heavy metals and the like into the exhaust gas EGb.

(12) The exhaust gas treatment facility according to a twelfth aspect,
in the exhaust gas treatment facility according to the eleventh aspect, the upstream reactant supplier 20f is capable of supplying the hydroxide generated in the regeneration device 60 into the upstream exhaust gas EGf as the upstream reactant RSf.

(13) The exhaust gas treatment facility according to a thirteenth aspect further includes,
in the exhaust gas treatment facility according to any one of the tenth aspect to the twelfth aspect, an exhaust heat recovery device 5 capable of heating a heating medium by exchanging heat between the heating medium and a treated exhaust gas EGt which is the exhaust gas EG, EGb exhausted from the outlet 11o of the dust collection filter device 10, 10b. Any one of the reactant supplier 20, 20f, 20fa, 20b, the acid gas separation device 30, 30a, 30b, and the regeneration device 60 includes an exhaust heat utilization device capable of utilizing heat of the heating medium heated by the exhaust heat recovery device 26, 36, 47, 49, 63. Alternatively, an exhaust heat utilization device capable of utilizing heat of the heating medium heated by the exhaust heat recovery device 26, 36, 47, 49, 63 is included in another device or another facility other than the devices constituting the exhaust gas treatment facility.

In the present aspect, the heat of the treated exhaust gas EGt can be effectively used in any one of the reactant supplier 20, 20f, 20fa, 20b, the acid gas separation device 30, 30a, 30b, and the regeneration device 60, or in devices or facilities other than the devices constituting the exhaust gas treatment facility.

(14) The exhaust gas treatment facility according to a fourteenth aspect,
in the exhaust gas treatment facility according to any one of the tenth aspect to the twelfth aspect, the acid gas separation device 30, 30a, 30b includes a heating device 31, 31a capable of heating the solid SS from the discharger 15 to generate the basic oxide and the gas from the reaction product contained in the solid SS. The exhaust gas treatment facility further includes an exhaust heat recovery device 5g, 5s, 5ga, 5sa capable of heating a heating medium by exchanging heat between the heated solid SSh containing the basic oxide generated in the heating device 31, 31a or the gas and the heating medium. Any one of the reactant supplier 20, 20f, 20fa, 20b, the acid gas separation device 30, 30a, 30b, and the regeneration device 60 includes an exhaust heat utilization device capable of utilizing heat of the heating medium heated by the exhaust heat recovery device 5g, 5s, 5ga, 5sa. Alternatively, an exhaust heat utilization device capable of utilizing heat of the heating medium heated by the exhaust heat recovery device is included in another device or another facility other than the devices constituting the exhaust gas treatment facility.

In the present aspect, the heat of the heated solid SSh or the gas containing the basic oxide generated in the heating device 31, 31a can be effectively used in any one of the reactant supplier 20, 20f, 20fa, 20b, the acid gas separation device 30, 30a, 30b, and the regeneration device 60, or in devices or facilities other than the devices constituting the exhaust gas treatment facility.

(15) The exhaust gas treatment facility according to a fifteenth aspect further includes,
in the exhaust gas treatment facility according to any one of the tenth aspect to the twelfth aspect, an exhaust heat recovery device 5b capable of heating a heating medium by causing the heating medium to absorb a part of reaction heat generated when water or steam is supplied to the basic oxide in the regeneration device 60.

Any one of the reactant supplier 20, 20f, 20fa, 20b, the acid gas separation device 30, 30a, 30b, and the regeneration device 60 includes an exhaust heat utilization device capable of utilizing heat of the heating medium heated by the exhaust heat recovery device 5b, or an exhaust heat utilization device capable of utilizing heat of the heating medium heated by the exhaust heat recovery device is included in another device or another facility other than the devices constituting the exhaust gas treatment facility.

In the present aspect, the reaction heat generated when water or steam is supplied to the basic oxide in the regeneration device 60 can be effectively used in any of the reactant supplier 20, 20f, 20fa, 20b and the acid gas separation device 30, 30a, 30b, or in other devices or other facilities except for the devices constituting the exhaust gas treatment facility.

The method for treating an exhaust gas in the above embodiment is understood as follows, for example.

(16) A method for treating an exhaust gas according to a sixteenth aspect, the method includes
a reactant supplying step S1, S21 of supplying a reactant RS, RSb capable of reacting with carbon dioxide to an exhaust gas EG, EGb of 250°C or higher containing an acid gas that contains carbon dioxide, and a collecting step S2, S22 of collecting, by using a dust collection filter device 10, 10b including a dust collection filter 13 having heat resistance of 250°C or higher, a solid SS, SSb flowing into the dust collection filter device 10, 10b

In the present aspect, the same effects as those of the exhaust gas treatment facility as the first aspect can be obtained. That is, in the present aspect, carbon dioxide in the exhaust gas EG, EGb can be removed together with fine powder in the exhaust gas EG, EGb. Furthermore, in the present aspect, the removal efficiency of carbon dioxide from the exhaust gas EG, EGb can be increased.

(17) The method for treating an exhaust gas according to a seventeenth aspect further includes,
in the method for treating an exhaust gas according to the sixteenth aspect, an upstream reactant supplying step S11, S11a of supplying an upstream reactant RSf capable of reacting with the acid gas to an upstream exhaust gas EGf at 250°C or higher containing an acid gas that contains carbon dioxide, in addition to a downstream reactant supplying step S21 as the reactant supplying step S21, and an upstream collecting step S12 of collecting, by using the upstream dust collection filter device 10f including an upstream dust collection filter having heat resistance of 250°C or higher, the solid SSf flowing into the upstream dust collection filter device 10f in addition to a downstream collecting step S21 as the collecting step S21. In the downstream reactant supplying step S21, a downstream reactant RSb which is the reactant RSb is supplied into a downstream exhaust gas EGb which is an exhaust gas EGb exhausted from the upstream dust collection filter device 10f.

In the present aspect, the upstream dust collection filter device 10f can collect ash and heavy metals in addition to the reaction product of the acid gas and the upstream reactant RSf in the upstream exhaust gas EGf. Further, in the present aspect, the downstream dust collection filter device 10b can exclusively collect the reaction product of the acid gas that has not reacted with the upstream reactant RSf among the acid gases in the upstream exhaust gas EGf and the downstream reactant RSb.

(18) The method for treating exhaust gas according to an eighteenth aspect,
in the method for treating an exhaust gas according to the sixteenth aspect, in the upstream reactant supplying step S11a, a metal carbonate or a metal bicarbonate as the upstream reactant RSf is supplied into the upstream exhaust gas EGf.

In the present aspect, when sulfur dioxide and hydrochloric acid are contained as acid gases in the upstream exhaust gas EGf, these can be efficiently collected in the upstream dust collection filter device 10f in the form of reaction products. Further, in the present aspect, since sulfur dioxide and hydrochloric acid are hardly contained in the downstream exhaust gas EGb, the reaction efficiency between carbon dioxide in the downstream exhaust gas EGb and the downstream reactant RSb can be enhanced.

(19) The method for treating an exhaust gas according to a nineteenth aspect, the method further includes,
in the method for treating an exhaust gas according to the seventeenth aspect or the eighteenth aspect, a NOx reducing agent supplying step S31 of supplying a NOx reducing agent into the upstream exhaust gas EGf. In the upstream dust collection filter device 10f and in an environment in which a reduction catalyst 17 is present, the NOx reducing agent in the upstream exhaust gas EGf reacts with nitrogen monoxide in the upstream exhaust gas EGf to generate nitrogen and water.

In the present aspect, when the upstream exhaust gas EGf contains nitrogen monoxide, the upstream exhaust gas EGf can be decomposed into nitrogen and water.

(20) The method for treating an exhaust gas according to a twentieth aspect, the method further includes,
in the method for treating an exhaust gas according to any one of the seventeenth aspect to the nineteenth aspect, a NOx reducing agent supplying step S31a of supplying a NOx reducing agent into the downstream exhaust gas EGb. In a downstream dust collection filter device 10b as the dust collection filter device 10b and in an environment in which a reduction catalyst 17 is present, the NOx reducing agent in the downstream exhaust gas EGb reacts with nitrogen monoxide in the downstream exhaust gas EGb to generate nitrogen and water.

In the present aspect, when the downstream exhaust gas EGb contains nitrogen monoxide, the downstream exhaust gas EGb can be decomposed into nitrogen and water.

(21) The method for treating an exhaust gas according to a twenty-first aspect further includes,
in the method for treating an exhaust gas according to any one of the sixteenth aspect to the eighteenth aspect, a NOx reducing agent supplying step S31, S31a of supplying a NOx reducing agent into the exhaust gas EG, EGb. In the dust collection filter device 10, 10b and in an environment in which a reduction catalyst is present, the NOx reducing agent in the exhaust gas reacts with nitrogen monoxide in the exhaust gas EG to generate nitrogen and water.

In the present aspect, when the exhaust gas EG contains nitrogen monoxide, the exhaust gas EG can be decomposed into nitrogen and water.

(22) The method for treating an exhaust gas according to a twenty-second aspect,
in the method for treating an exhaust gas according to any one of the sixteenth aspect to the twenty-first aspect, in the reactant supplying step S1, S21, a hydroxide, a metal carbonate, a metal bicarbonate, or a metal oxide is supplied into the exhaust gas EG, EGb as the reactant RS, RSb.

(23) The method for treating an exhaust gas according to a twenty-third aspect, the method further includes,
in the method for treating an exhaust gas according to any one of the sixteenth aspect to the twenty-second aspect, a backwashing step S4, S24 of separating the solid SS, SSb collected by the dust collection filter 13 of the dust collection filter device 10, 10b from the dust collection filter 13, and a discharging step S5, S25 of discharging the solid SS, SSb separated from the dust collection filter 13 in the backwashing step S4, S24 from the dust collection filter device 10, 10b.

In the present aspect, the solids SS, SSb collected by the dust collection filter 13 of the dust collection filter device 10, 10b can be discharged to the outside of the dust collection filter device 10, 10b.

(24) The method for treating an exhaust gas according to a twenty-fourth aspect,
in the method for treating an exhaust gas according to any one of the sixteenth aspect to the twenty-first aspect, in the reactant supplying step S1, S21, a hydroxide is supplied into the exhaust gas EG, EGb as the reactant RS, RSb. The method further includes a backwashing step S4, S24 of separating the solid SS, SSb collected by the dust collection filter 13 of the dust collection filter device 10, 10b from the dust collection filter 13, a discharging step S5, S25 of discharging the solid SS, SSb separated from the dust collection filter 13 in the backwashing step S4, S24 from the dust collection filter device 10, 10b, an acid gas separating step S6, S26 of generating a basic oxide by separating an acid gas from a reaction product of the acid gas contained in the exhaust gas EG, EGb and the hydroxide as the reactant RS, RSb, and a regenerating step S9, S28 of generating a hydroxide by supplying water or steam to the basic oxide generated in the acid gas separating step S6, S26. In the acid gas separating step S6, S26, the basic oxide is generated from the reaction product contained in the solid SS, SSb discharged from the dust collection filter device 10, 10b in the discharging step S5, S25. In the reactant supplying step S1, S21, the hydroxide generated in the regenerating step S9, S28 is supplied into the exhaust gas EG, EGb.

In the present aspect, the solid SS, SSb as the reaction product generated by the reaction between the carbon dioxide in the exhaust gas EG, EGb and the reactant RS, RSb can be discharged from the dust collection filter device 10, 10b. Furthermore, in the present aspect, since the acid gas separating step S6, S26 and the regenerating step S9, S28 are performed, the hydroxides as the reactant RS, RSb can be regenerated from the reaction products discharged from the dust collection filter device 10, 10b. In the reactant supplying step S1, S21 of the present aspect, the hydroxides obtained in the regenerating step S9, S28 are supplied into the exhaust gas EG, EGb. Therefore, in the present aspect, the consumption amount of the hydroxide as the reactant RS, RSb can be suppressed.

(25) The method for treating an exhaust gas according to a twenty-fifth aspect,
in the method for treating an exhaust gas according to the seventeenth aspect, in the downstream reactant supplying step S21, a hydroxide is supplied as the downstream reactant RSb into the downstream exhaust gas EGb as the exhaust gas EGb. The method further includes a backwashing step S24 of separating the solid SSb collected by the dust collection filter 13 of the downstream dust collection filter device 10b, which is the dust collection filter device 10b used in the downstream collecting step S22, from the dust collection filter 13 of the downstream dust collection filter device 10b, a discharging step S25 of discharging the solid SSb separated from the dust collection filter 13 of the downstream dust collection filter device 10b in the backwashing step S24 from the downstream dust collection filter device 10b, an acid gas separating step S26 of generating a basic oxide by separating an acid gas from a reaction product of the acid gas contained in the downstream exhaust gas EGb and the hydroxide as the downstream reactant RSb, and a regenerating step S28 of generating a hydroxide by supplying water or steam to the basic oxide generated in the acid gas separating step S26. In the acid gas separating step S26, the basic oxide is generated from the reaction product contained in the solid SSb discharged from the downstream dust collection filter device 10b in the discharging step S25. In the downstream reactant supplying step S21, the hydroxide generated in the regenerating step S28 is supplied into the downstream exhaust gas EGb.

The upstream dust collection filter device 10f of the present aspect can collect ash and heavy metals in addition to the reaction product of the acid gas and the upstream reactant RSf in the upstream exhaust gas EGf. In addition, in the downstream dust collection filter device 10b of the present aspect, it is possible to exclusively collect the reaction product between the acid gas that has not reacted with the upstream reactant RSf among the acid gases in the upstream exhaust gas EGf and the hydroxide as the downstream reactant RSb, and discharge the reaction product as the solid SSb from the downstream dust collection filter device 10b. Moreover, in the present aspect, since sulfur dioxide and hydrochloric acid are hardly contained in the downstream exhaust gas EGb, the reaction efficiency between carbon dioxide in the downstream exhaust gas EGb and the downstream reactant RSb can be enhanced.

Furthermore, in the present aspect, since the acid gas separating step S26 and the regenerating step S28 are performed, the hydroxide as the downstream reactant RSb can be regenerated from the reaction product discharged from the downstream dust collection filter device 10b. In the downstream reactant supplying step S21 of the present aspect, the hydroxide obtained in the regenerating step S28 is supplied into the downstream exhaust gas EGb. Therefore, in the present aspect, the consumption amount of the hydroxide as the reactant RS, RSb can be suppressed. Moreover, in the present aspect, since the reactant RS, RSb are regenerated from the solid SSb that contains the reaction product and hardly contains heavy metals and the like, it is possible to supply the reactant RS, RSb with high purity that do not contain heavy metals and the like into the exhaust gas.

(26) The method for treating an exhaust gas according to a twenty-sixth aspect,
in the method for treating an exhaust gas according to the twenty-fifth aspect, in the upstream reactant supplying step S11, the hydroxide generated in the regenerating step S28 is supplied into the upstream exhaust gas EGf as the upstream reactant RSf.

(27) The method for treating an exhaust gas according to a twenty-seventh aspect, the method further includes,
in the method for treating an exhaust gas according to any one of the twenty-fourth aspect to the twenty-sixth aspect, an exhaust heat recovering step S3, S23 of heating a heating medium by exchanging heat between the heating medium and a treated exhaust gas EGt which is the exhaust gas EG, EGb exhausted from the dust collection filter device 10, 10b. Any one of the reactant supplying step S1, S11, S11a, S21, the acid gas separating step S6, S26, and the regenerating step S9, S28 includes an exhaust heat utilizing step S7a, S27a of utilizing heat of the heating medium heated in the exhaust heat recovering step S3, S23. Alternatively, an exhaust heat utilizing step of utilizing heat of the heating medium heated in the exhaust heat recovering step S3, S23 is performed in a step other than the steps performed in the method for treating an exhaust gas.

In the present aspect, the heat of the treated exhaust gas EGt can be effectively used in any one of the reactant supplying step S1, S11, S11a, S21, the acid gas separating step S6, S26, and the regenerating step S9, S28, or in the steps other than the steps performed in the method for treating an exhaust gas.

(28) The method for treating an exhaust gas according to a twenty-eighth aspect,
in the method for treating an exhaust gas according to any one of the twenty-fourth aspect to the twenty-sixth aspect, the acid gas separating step S6 includes a product heating step S7b of heating the solid SS discharged from the dust collection filter device 10 to generate the basic oxide and the gas from the reaction product contained in the solid SS. The method further includes, an exhaust heat recovering step S5a of heating a heating medium by exchanging heat between the heated solid SSh containing the basic oxide or the gas generated by performing the product heating step S7b and the heating medium. Any one of the reactant supplying step S1, the acid gas separating step S6, and the regenerating step S9 includes an exhaust heat utilizing step of utilizing heat of the heating medium heated in the exhaust heat recovering step S5a. Alternatively, an exhaust heat utilizing step of utilizing heat of the heating medium heated in the exhaust heat recovering step S5a is performed in a step other than the steps performed in the method for treating an exhaust gas.

In the present aspect, the heat of the heated solid SSh or the gas containing the basic oxide generated by performing the product heating step S7b can be effectively used in any one of the reactant supplying step S1, the acid gas separating step S6, and the regenerating step S9, or in other steps excluding the steps performed in the method for treating an exhaust gas.

(29) The method for treating an exhaust gas according to a twenty-ninth aspect, the method further includes,
in the method for treating an exhaust gas according to any one of the twenty-fourth aspect to the twenty-sixth aspect, an exhaust heat recovering step S5b of heating a heating medium by causing the heating medium to absorb a part of reaction heat generated when water or steam is supplied to the basic oxide in the regenerating step S9. Any one of the reactant supplying step S1, the acid gas separating step S6, and the regenerating step S9 includes an exhaust heat utilizing step of utilizing heat of the heating medium heated in the exhaust heat recovering step S5b. Alternatively, an exhaust heat utilizing step of utilizing heat of the heating medium heated in the exhaust heat recovering step S5b is performed in a step other than the steps performed in the method for treating an exhaust gas.

In the present aspect, the reaction heat generated when water or steam is supplied to the basic oxide in the regenerating step S9 can be effectively used in any one of the reactant supplying step S1 and the acid gas separating step S6, or in steps other than the steps performed in the method for treating an exhaust gas.

### Industrial Applicability

According to one aspect of the present disclosure, carbon dioxide in exhaust gas can be removed together with fine powder in the exhaust gas.

### Reference Signs List

1: exhaust gas generation source
2: exhaust gas line
2f: upstream exhaust gas line
2b: downstream exhaust gas line
2t: treated exhaust gas line
3: stack
4: suction blower
5, 5g, 5s, 5ga, 5sa, 5b: exhaust heat recovery device
10: dust collection filter device
10f: upstream dust collection filter device
10b: downstream dust collection filter device
11: case
11i: inlet
11o: outlet
12i: inlet-side space
12o: outlet-side space
13: dust collection filter
14: backwashing device
14a: high-pressure gas tank for backwashing
14b: high-pressure gas guide pipe
14c: on/off valve
15: discharger
17: reduction catalyst
20: reactant supplier
20f, 20fa: upstream reactant supplier
20b: downstream reactant supplier
21: storage portion
22: supply portion
23: quantitative supplier
24: transport line
25: air conveyor blower
26: air heater (exhaust heat utilization device)
30, 30a, 30b: acid gas separation device
31, 31a: heating device
32: barrel
32g: gas exhaust port
32s: solid discharge port
33: electric heater
34: barrel rotation mechanism
35: feeder
36: preheater (exhaust heat utilization device)
41: firing furnace
42: furnace frame
42cs: carrier gas space
42hs: heating space
43: feeder
44: diffusion plate
45: carrier gas blower
46d: lower burner
46u: upper burner
47: air heater (exhaust heat utilization device)
48: cyclone
48b: cyclone body
48i: inlet
48p: gas outlet pipe
48e: discharger
49: preheater (exhaust heat utilization device)
51: carbon dioxide separation device
52: absorption tower
53: absorption liquid tank
54: circulation line
55: liquid discharge line
56: circulation pump
57: undiluted absorption liquid tank
58: undiluted absorption liquid pump
59: acid gas line
60: regeneration device
61: reaction container
61i: inlet
61sm: water inlet
61o: outlet
62: stirrer
63: heater (exhaust heat utilization device)
70: NOx reducing agent supplier
EG: exhaust gas
EGf: upstream exhaust gas
EGb: downstream exhaust gas
EGt: treated exhaust gas
SS, SSf, SSb: solid
SSh: heated solid
RS: reactant
RSf: upstream reactant
RSb: downstream reactant

## Claims

1. An exhaust gas treatment facility comprising:
a dust collection filter device;
an exhaust gas line capable of introducing an exhaust gas containing an acid gas that contains carbon dioxide into the dust collection filter device; and
a reactant supplier capable of supplying a reactant capable of reacting with carbon dioxide into the exhaust gas,
wherein the dust collection filter device includes a case in which an inlet through which a gas flows in and an outlet through which a gas flows out are formed, and a dust collection filter that partitions an inside of the case into an inlet-side space on a side of the inlet and an outlet-side space on a side of the outlet and has heat resistance of 250°C or higher,
the exhaust gas line is connected to the inlet of the dust collection filter device, and
the reactant supplier is capable of supplying the reactant into the exhaust gas line or into the inlet-side space.

2. The exhaust gas treatment facility according to claim 1,
wherein the reactant supplier is connected to the exhaust gas line and is capable of supplying the reactant into the exhaust gas line.

3. The exhaust gas treatment facility according to claim 1 or 2, further comprising:
an upstream dust collection filter device in addition to a downstream dust collection filter device as the dust collection filter device;
an upstream exhaust gas line capable of introducing an upstream exhaust gas containing an acid gas that contains carbon dioxide into the upstream dust collection filter device, in addition to a downstream exhaust gas line as the exhaust gas line; and
an upstream reactant supplier capable of supplying an upstream reactant capable of reacting with the acid gas into the upstream exhaust gas, in addition to a downstream reactant supplier as the reactant supplier,
wherein the upstream dust collection filter device includes a case in which an inlet through which a gas flows in and an outlet through which a gas flows out are formed, and a dust collection filter that partitions an inside of the case of the upstream dust collection filter device into an inlet-side space on a side of the inlet of the upstream dust collection filter device and an outlet-side space on a side of the outlet of the upstream dust collection filter device and has heat resistance of 250°C or higher,
the upstream exhaust gas line is connected to the inlet of the upstream dust collection filter device,
the downstream exhaust gas line is connected to the outlet of the upstream dust collection filter device and is connected to the inlet of the downstream dust collection filter device, and is capable of introducing downstream exhaust gas as the exhaust gas into the downstream dust collection filter device, and
the upstream reactant supplier is capable of supplyng the upstream reactant to the upstream exhaust gas line and/or the inlet-side space of the upstream dust collection filter device.

4. The exhaust gas treatment facility according to claim 3,
wherein the upstream reactant supplier includes a storage portion capable of storing a metal carbonate or a metal bicarbonate as the upstream reactant, and a supply portion capable of supplying the metal carbonate or the metal bicarbonate stored in the storage portion to the upstream exhaust gas line or the inlet-side space of the upstream dust collection filter device.

5. The exhaust gas treatment facility according to claim 3, further comprising:
a NOx reducing agent supplier capable of supplying a NOx reducing agent into the upstream exhaust gas line,
wherein a reduction catalyst is attached to the dust collection filter of the upstream dust collection filter device.

6. The exhaust gas treatment facility according to claim 3, further comprising:
a NOx reducing agent supplier capable of supplying a NOx reducing agent into the downstream exhaust gas line,
wherein a reduction catalyst is attached to the dust collection filter of the downstream dust collection filter device.

7. The exhaust gas treatment facility according to claim 1 or 2, further comprising:
a NOx reducing agent supplier capable of supplying a NOx reducing agent into the exhaust gas line,
wherein a reduction catalyst is attached to the dust collection filter of the dust collection filter device.

8. The exhaust gas treatment facility according to claim 1 or 2,
wherein the reactant supplier includes a storage portion capable of storing a hydroxide, a metal carbonate, a metal bicarbonate, or a metal oxide as the reactant, and a supply portion capable of supplying the hydroxide, the metal carbonate, the metal bicarbonate, or the metal oxide stored in the storage portion of the reactant supplier into the exhaust gas.

9. The exhaust gas treatment facility according to claim 1 or 2,
wherein the dust collection filter device includes a backwashing device capable of separating a solid collected by the dust collection filter from the dust collection filter by sending a high-pressure gas to the outlet-side space so that the outlet-side space has a higher pressure than the inlet-side space, and a discharger capable of discharging the solid in the inlet-side space separated from the dust collection filter to an outside.

10. The exhaust gas treatment facility according to claim 1 or 2,
wherein the reactant supplier includes a storage portion capable of storing a hydroxide as the reactant and a supply portion capable of supplying the hydroxide stored in the storage portion of the reactant supplier into the exhaust gas, and
the dust collection filter device includes a backwashing device capable of separating a solid collected by the dust collection filter from the dust collection filter by sending a high-pressure gas to the outlet-side space so that the outlet-side space has a higher pressure than the inlet-side space, and a discharger capable of discharging the solid in the inlet-side space separated from the dust collection filter to an outside, and
the exhaust gas treatment facility further comprises:
an acid gas separation device capable of generating a basic oxide by separating an acid gas from a reaction product of the acid gas contained in the exhaust gas and the hydroxide as the reactant; and
a regeneration device capable of generating a hydroxide by supplying water or steam to the basic oxide from the acid gas separation device,
the acid gas separation device is capable of generating the basic oxide from the reaction product contained in the solid from the discharger, and
the reactant supplier is capable of supplying the hydroxide generated in the regeneration device into the exhaust gas.

11. The exhaust gas treatment facility according to claim 3,
wherein the downstream reactant supplier includes a storage portion capable of storing a hydroxide as the reactant, and a supply portion capable of supplying the hydroxide stored in the storage portion of the downstream reactant supplier into the downstream exhaust gas as the exhaust gas, and
the downstream dust collection filter device includes a backwashing device capable of separating a solid collected by the dust collection filter of the downstream dust collection filter device from the dust collection filter of the downstream dust collection filter device by sending a high-pressure gas to the outlet-side space of the downstream dust collection filter device so that the outlet-side space of the downstream dust collection filter device has a higher pressure than the inlet-side space of the downstream dust collection filter device, and a discharger capable of discharging the solid in the inlet-side space separated from the dust collection filter of the downstream dust collection filter device to an outside,
the exhaust gas treatment facility further comprises:
an acid gas separation device capable of generating a basic oxide by separating an acid gas from a reaction product of the acid gas contained in the downstream exhaust gas and the hydroxide as the reactant; and
a regeneration device capable of generating a hydroxide by supplying water or steam to the basic oxide from the acid gas separation device,
the acid gas separation device is capable of generating the basic oxide from the reaction product contained in the solid from the discharger, and
the downstream reactant supplier is capable of supplying the hydroxide generated by the regeneration device into the downstream exhaust gas.

12. The exhaust gas treatment facility according to claim 11,
wherein the upstream reactant supplier is capable of supplying the hydroxide generated in the regeneration device into the upstream exhaust gas as the upstream reactant.

13. The exhaust gas treatment facility according to claim 10, further comprising:
an exhaust heat recovery device capable of heating a heating medium by exchanging heat between the heating medium and a treated exhaust gas which is the exhaust gas exhausted from the outlet of the dust collection filter device,
wherein any one of the reactant supplier, the acid gas separation device, and the regeneration device includes an exhaust heat utilization device capable of utilizing heat of the heating medium heated by the exhaust heat recovery device, or
an exhaust heat utilization device capable of utilizing heat of the heating medium heated by the exhaust heat recovery device is included in another device or another facility other than the devices constituting the exhaust gas treatment facility.

14. The exhaust gas treatment facility according to claim 10,
wherein the acid gas separation device includes a heating device capable of heating the solid from the discharger to generate the basic oxide and the gas from the reaction product contained in the solid,
the exhaust gas treatment facility further comprises:
an exhaust heat recovery device capable of heating a heating medium by exchanging heat between the heated solid containing the basic oxide generated in the heating device or the gas and the heating medium, and
any one of the reactant supplier, the acid gas separation device, and the regeneration device includes an exhaust heat utilization device capable of utilizing heat of the heating medium heated by the exhaust heat recovery device, or
an exhaust heat utilization device capable of utilizing heat of the heating medium heated by the exhaust heat recovery device is included in another device or another facility other than the devices constituting the exhaust gas treatment facility.

15. The exhaust gas treatment facility according to claim 10, further comprising:
an exhaust heat recovery device capable of heating a heating medium by causing the heating medium to absorb a part of reaction heat generated when water or steam is supplied to the basic oxide in the regeneration device,
wherein any one of the reactant supplier, the acid gas separation device, and the regeneration device includes an exhaust heat utilization device capable of utilizing heat of the heating medium heated by the exhaust heat recovery device, or
an exhaust heat utilization device capable of utilizing heat of the heating medium heated by the exhaust heat recovery device is included in another device or another facility other than the devices constituting the exhaust gas treatment facility.

16. A method for treating an exhaust gas, the method comprising:
a reactant supplying step of supplying a reactant capable of reacting with carbon dioxide to an exhaust gas of 250°C or higher containing an acid gas that contains carbon dioxide; and
a collecting step of collecting, by using a dust collection filter device including a dust collection filter having heat resistance of 250°C or higher, a solid flowing into the dust collection filter device.

17. The method for treating an exhaust gas according to claim 16, the method further comprising:
an upstream reactant supplying step of supplying an upstream reactant capable of reacting with the acid gas to an upstream exhaust gas of 250°C or higher containing an acid gas that contains carbon dioxide, in addition to a downstream reactant supplying step as the reactant supplying step; and
an upstream collecting step of collecting, by using the upstream dust collection filter device including a dust collection filter having heat resistance of 250°C or higher, a solid flowing into the upstream dust collection filter device in addition to a downstream collecting step as the collecting step,
wherein in the downstream reactant supplying step, a downstream reactant which is the reactant is supplied into a downstream exhaust gas which is an exhaust gas exhausted from the upstream dust collection filter device.

18. The method for treating an exhaust gas according to claim 17,
wherein in the upstream reactant supplying step, a metal carbonate or a metal bicarbonate as the upstream reactant is supplied into the upstream exhaust gas.

19. The method for treating an exhaust gas according to claim 17 or 18, the method further comprising:
a NOx reducing agent supplying step of supplying a NOx reducing agent into the upstream exhaust gas,
wherein in the upstream dust collection filter device and in an environment in which a reduction catalyst is present, the NOx reducing agent in the upstream exhaust gas reacts with nitrogen monoxide in the upstream exhaust gas to generate nitrogen and water.

20. The method for treating an exhaust gas according to claim 17 or 18, the method further comprising:
a NOx reducing agent supplying step of supplying a NOx reducing agent into the downstream exhaust gas,
wherein in a downstream dust collection filter device as the dust collection filter device and in an environment in which a reduction catalyst is present, the NOx reducing agent in the downstream exhaust gas reacts with nitrogen monoxide in the downstream exhaust gas to generate nitrogen and water.

21. The method for treating an exhaust gas according to claim 16, the method further comprising:
a NOx reducing agent supplying step of supplying a NOx reducing agent into the exhaust gas,
wherein in the dust collection filter device and in an environment in which a reduction catalyst is present, the NOx reducing agent in the exhaust gas reacts with nitrogen monoxide in the exhaust gas to generate nitrogen and water.

22. The method for treating an exhaust gas according to any one of claims 16 to 18,
wherein in the reactant supplying step, a hydroxide, a metal carbonate, a metal bicarbonate, or a metal oxide is supplied into the exhaust gas as the reactant.

23. The method for treating an exhaust gas according to any one of claims 16 to 18,
the method further comprising:
a backwashing step of separating the solid collected by the dust collection filter of the dust collection filter device from the dust collection filter; and
a discharging step of discharging the solid separated from the dust collection filter in the backwashing step from the dust collection filter device.

24. The method for treating an exhaust gas according to any one of claims 16 to 18,
wherein in the reactant supplying step, a hydroxide is supplied into the exhaust gas as the reactant,
the method further comprising:
a backwashing step of separating the solid collected by the dust collection filter of the dust collection filter device from the dust collection filter;
a discharging step of discharging the solid separated from the dust collection filter in the backwashing step from the dust collection filter device;
an acid gas separating step of generating a basic oxide by separating an acid gas from a reaction product of the acid gas contained in the exhaust gas and the hydroxide as the reactant; and
a regenerating step of generating a hydroxide by supplying water or steam to the basic oxide generated in the acid gas separating step,
in the acid gas separating step, the basic oxide is generated from the reaction product contained in the solid discharged from the dust collection filter device in the discharging step, and
in the reactant supplying step, the hydroxide generated in the regenerating step is supplied into the exhaust gas.

25. The method for treating an exhaust gas according to claim 17,
wherein in the downstream reactant supplying step, a hydroxide is supplied as the downstream reactant into the downstream exhaust gas as the exhaust gas,
the method further comprising:
a backwashing step of separating the solid collected by the dust collection filter of the downstream dust collection filter device, which is the dust collection filter device used in the downstream collecting step, from the dust collection filter of the downstream dust collection filter device;
a discharging step of discharging the solid separated from the dust collection filter of the downstream dust collection filter device in the backwashing step from the downstream dust collection filter device;
an acid gas separating step of generating a basic oxide by separating an acid gas from a reaction product of the acid gas contained in the downstream exhaust gas and the hydroxide as the downstream reactant; and
a regenerating step of generating a hydroxide by supplying water or steam to the basic oxide generated in the acid gas separating step,
in the acid gas separating step, the basic oxide is generated from the reaction product contained in the solid discharged from the downstream dust collection filter device in the discharging step, and
in the downstream reactant supplying step, the hydroxide generated in the regenerating step is supplied into the downstream exhaust gas.

26. The method for treating an exhaust gas according to claim 25,
wherein in the upstream reactant supplying step, the hydroxide generated in the regenerating step is supplied into the upstream exhaust gas as the upstream reactant.

27. The method for treating an exhaust gas according to claim 24, the method further comprising:
an exhaust heat recovering step of heating a heating medium by exchanging heat between the heating medium and a treated exhaust gas which is the exhaust gas exhausted from the dust collection filter device,
wherein any one of the reactant supplying step, the acid gas separating step, and the regenerating step includes an exhaust heat utilizing step of utilizing heat of the heating medium heated in the exhaust heat recovering step, or
an exhaust heat utilizing step of utilizing heat of the heating medium heated in the exhaust heat recovering step is performed in a step other than the steps performed in the method for treating an exhaust gas.

28. The method for treating an exhaust gas according to claim 24, the method further comprising:
wherein the acid gas separating step includes a product heating step of heating the solid discharged from the dust collection filter device to generate the basic oxide and gas from the reaction product contained in the solid,
the method further comprises an exhaust heat recovering step of heating a heating medium by exchanging heat between the heated solid containing the basic oxide or the gas generated by performing the product heating step and the heating medium, and
any one of the reactant supplying step, the acid gas separating step, and the regenerating step includes an exhaust heat utilizing step of utilizing heat of the heating medium heated in the exhaust heat recovering step, or
an exhaust heat utilizing step of utilizing heat of the heating medium heated in the exhaust heat recovering step is performed in a step other than the steps performed in the method for treating an exhaust gas.

29. The method for treating an exhaust gas according to claim 24, the method further comprising:
an exhaust heat recovering step of heating a heating medium by causing the heating medium to absorb a part of reaction heat generated when water or steam is supplied to the basic oxide in the regenerating step, and
any one of the reactant supplying step, the acid gas separating step, and the regenerating step includes an exhaust heat utilizing step of utilizing heat of the heating medium heated in the exhaust heat recovering step, or
an exhaust heat utilizing step of utilizing heat of the heating medium heated in the exhaust heat recovering step is performed in a step other than the steps performed in the method for treating an exhaust gas.
